(19) Europäisches Patentamt
European Patent Office
Office européen des brevets

(11) **EP 1 509 746 B1**

(12) **EUROPÄISCHE PATENTSCHRIFT**

(45) Veröffentlichungstag und Bekanntmachung des Hinweises auf die Patenterteilung:
**26.01.2011 Patentblatt 2011/04**

(21) Anmeldenummer: **03735533.6**

(22) Anmeldetag: **04.06.2003**

(51) Int Cl.:
*G01B 11/00* *(2006.01)*    *G01B 11/02* *(2006.01)*

(86) Internationale Anmeldenummer:
**PCT/EP2003/005810**

(87) Internationale Veröffentlichungsnummer:
**WO 2003/104745 (18.12.2003 Gazette 2003/51)**

(54) **VORRICHTUNG ZUR MESSUNG VON AUSSEN-, INNENABMESSUNGEN UND ABSTÄNDEN VON MESSOBJEKTEN**

DEVICE FOR MEASURING EXTERNAL AND INTERNAL DIMENSIONS AND DISTANCES BETWEEN MEASUREMENT OBJECTS

DISPOSITIF POUR MESURER DES DIMENSIONS INTERIEURES ET EXTERIEURES, AINSI QUE DES ESPACEMENTS ENTRE DES OBJETS DE MESURE

(84) Benannte Vertragsstaaten:
**AT BE BG CH CY CZ DE DK EE ES FI FR GB GR HU IE IT LI LU MC NL PT RO SE SI SK TR**

(30) Priorität: **06.06.2002 DE 10225376**
**03.07.2002 DE 10229810**
**28.11.2002 DE 10255533**
**21.05.2003 DE 10322907**

(43) Veröffentlichungstag der Anmeldung:
**02.03.2005 Patentblatt 2005/09**

(73) Patentinhaber: **Tutschke, Udo**
**30539 Hannover (DE)**

(72) Erfinder: **Tutschke, Udo**
**30539 Hannover (DE)**

(74) Vertreter: **König, Norbert**
**Brümmerstedt Oelfke Seewald & König**
**Anwaltskanzlei**
**Postfach 10 26**
**30010 Hannover (DE)**

(56) Entgegenhaltungen:
**DD-A- 240 777    DE-A- 3 816 322**
**GB-A- 2 278 434    US-A- 4 963 023**

**Beschreibung**

Die Erfindung betrifft eine Vorrichtung zur Messung von Außenabmessungen, Innenabmessungen und Abständen von Messobjekten gemäß Oberbegriff des Anspruchs 1 bzw. des Anspruchs 7.

Eine derartige Vorrichtung ist durch die DE 38 16 322 bekannt. Sie ist wegen der Ausnutzung nur einer Messfeldhälfte für kleine Messobjekte ausgelegt, wobei die optische Abtastung in nur einer Ebene und einer Messachse erfolgt. Die Messfrequenz ist durch die Drehzahl mechanischer Komponenten (Spiralschlitz-Scheibe) begrenzt.

Die Aufgabe der vorliegenden Erfindung besteht darin, die Vorrichtung der eingangs genannten Art dahingehend zu verbessern, dass Messobjekte gleichzeitig in verschiedenen räumlichen Ebenen oder in einer Ebene in verschiedenen Achsen abtastbar sind und/oder eine Vervielfachung der Messfrequenz erreichbar ist.

Diese Aufgabe wird durch die Erfindung gemäß Anspruch 1 bzw. 7 gelöst.

Vorteilhafte und zweckmäßige Weiterbildungen der Aufgabenlösung sind in den abhängigen Ansprüchen angegeben.

Bei der erfindungsgemäßen Vorrichtung wird die Bestimmung von Abmessungen und Abständen von Messobjekten auf eine Zeitmessung zurückgeführt. Es wird die Zeit gemessen, die ein Lichtpunkt benötigt, um eine bestimmte durch zwei Kanten oder dgl. begrenzte Strecke zu durchlaufen. Diese Strecke ist z. B. der Außendurchmesser oder der Innendurchmesser eines Messobjektes, kann aber auch der Abstand zweier Gegenstände sein. Bei der erfindungsgemäßen Vorrichtung wird ein parallel zu sich verschiebbarer Strahl mittels einer Spaltblende und einer dahinter angeordneten drehbaren Scheibe erzeugt, die spiralig geschlitzt ist. Die Position des zu sich selbst verschobenen parallelen Strahls folgt dem Gesetz $s = c \cdot \varphi$, wobei $\varphi$ der Drehwinkel der Spiralenschlitz-Scheibe und c eine Konstante ist. Der Spiralschlitz blendet aus dem den Spalt D durchsetzenden Parallelbündel einen engen Lichtstrahl aus, der praktisch als Lichtpunkt erscheint. Durch Drehung der Scheibe DS verschiebt sich der eine Lochblende LB darstellende Schnittpunkt des Spiralschlitzes mit dem Spalt entlang dem Spalt. Dadurch bewegt sich der Lichtstrahl bzw. Lichtpunkt je nach Drehrichtung der Scheibe periodisch mit konstanter Geschwindigkeit von unten nach oben oder umgekehrt. Der Spiralschlitz gehorcht der Gleichung für eine archimedische Spirale mit dem Radius $r = c \cdot \varphi$, mit $c = v_L/\omega$, worin $v_L$ die Geschwindigkeit der Lichtstrahl- bzw. Lichtpunktverschiebung, $\omega$ die Winkelgeschwindigkeit der sich drehenden Spiralschlitz-Scheibe DS und $\varphi$ der Drehwinkel der Scheibe DS ist.

Ist die Scheibe DS gemäß einer vorteilhaften Weiterbildung der Erfindung mit mehreren Spiralschlitzen ausgestattet, die zueinander einen äquidistanten Winkelabstand haben, so wird sich pro Scheibenumdrehung der Schnittpunkt des Spiralschlitzes mit dem Spalt mehrfach entlang des Spalts periodisch von unten nach oben bzw. von oben nach unten bewegen.

Das vorgeschlagene Messverfahren ist linear, so dass für eine Linearisierung weder ein zusätzliches Geräteteil noch Softwareaufwand notwendig sind. Die Erfindung ermöglicht die gleichzeitige optische Abtastung des Messobjektes in verschiedenen räumlichen Ebenen bzw. in verschiedenen Achsen einer Ebene ohne größeren zusätzlichen technischen Aufwand. Es ist eine hohe Messgenauigkeit von ca. 1 $\mu$m möglich. Das Messobjekt kann an beliebiger Stelle im Messfeld angeordnet werden; das Messfeld entspricht etwa dem Doppelten des maximalen Abstandes des Spiralschlitzes vom Mittelpunkt des Spiralschlitzes bzw. der Spiralschlitz-Scheibe. Es besteht Linearität über das gesamte Messfeld und im gesamten Messbereich. Da die Schattenzeit erfindungsgemäß ermittelt wird und nicht die Lichtintensität außerhalb und innerhalb des Schattens, können transparente Objekte gemessen werden ohne Kenntnis des Transmissionsgrades. Die Messempfindlichkeit und die Messgenauigkeit bleiben unabhängig von der Größe der Messobjekte erhalten. Schon mit geringen technischen Maßnahmen zur Messfrequenzerhöhung ist eine relativ hohe Abtastfrequenz von ca. 1 kHz und mehr erreichbar. Die gesamte Messeinheit (Lichtquelle, Messfeld, Empfänger) kann prinzipiell sehr klein gebaut werden, eignet sich aber auch für die Vermessung von großen Messobjekten, z. B. Großrohre. An die Lichtfelderzeugung und die Lichtstrahldetektierung werden nur geringe Anforderungen gestellt, so dass die erfindungsgemäße Messvorrichtung preiswert herstellbar ist. Hauptanwendungen der Erfindung sind die Überwachung von Fertigungsvorgängen in der Metall, Kunststoff und Gummi verarbeitenden Industrie. Die erfindungsgemäße Messvorrichtung kann auch als Kontrollinstrument für hochgenaue Fertigung in der Werkstatt eingesetzt werden.

Die Erfindung soll nachfolgend anhand der beigefügten Zeichnung, in der Ausführungsbeispiele dargestellt sind, näher erläutert werden.

Es zeigen

Fig. 1 und Fig. 2      eine Seitenansicht und eine Hinteran- sicht von vier erzeugenden Systemen (Anord- nung aus Lichtquelle, Spaltblende und Spiral- schlitz-Scheibe), wobei die optischen Kompo- nenten und der Strahlengang nur für zwei erzeugende Systeme (IV und III) schematisch dargestellt sind,

Fig. 3      eine Anordnung der optischen Komponenten und des Strahlenganges in der Draufsicht bei ei- ner Vervierfachung der Abtastrate,

Fig. 4 schematisch einen Abtastrichtungswechsler,

Fig. 5 Signalströme von Fotodioden bei einer Rechts- drehung der Spiralschlitz-Scheibe mit Angabe der Periodendauer T = Umlaufzeit der Spiral- schlitz-Scheibe und der Zeit $t_d$, in der der Abtastlichtstrahl den Durchmesser des Messob- jektes überstreicht,

Fig. 6 schematisch eine Ausführungsform zur Erhöhung der Anzahl der erzeugenden Systeme, die eine Scheibe mit vier Spiralschlitzen aufweist,

Fig. 7 eine Seitenansicht einer Ausführungsform zur Messung mit vier erzeugenden Systemen in ei- ner Ebene in vier Achsen,

Fig. 8 eine Seitenansicht einer anderen Ausführungs- form der erfindungsgemäßen Vorrichtung zur Messung mit vier erzeugenden Systemen in ei- ner Ebene in zwei Achsen,

Fig. 9 eine Draufsicht auf die den Lichtquellen ab- gewandte Seite (Hinteransicht) von vier er- zeugenden Systemen bei der Ausführungsform nach Fig. 8,

Fig. 10 eine Draufsicht auf die Vorrichtung nach den Fig. 8 und 9,

Fig. 11 Ausgangssignale der Vorrichtung nach den Fig. 8-10,

Fig. 12 eine Darstellung der Umfangskante vom Mess- feldende bei vier erzeugenden Systemen,

Fig. 13 eine Seitenansicht einer weiteren Ausfüh- rungsform der erfindungsgemäßen Vorrichtung zur Erfassung von Außen- und Innenabmessun- gen,

Fig. 14 eine Draufsicht auf die den Lichtquellen ab- gewandte Seite (Hinteransicht) der Vorrich- tung nach Fig. 13,

Fig. 15 eine Darstellung des zeitlichen Verlaufs der mit der Vorrichtung nach den Fig. 13 und 14 gewonnen Signale während eines Umlaufs der Spiralschlitz-Scheibe,

Fig. 16 eine Einrichtung zur optischen Aufweitung der Abtastlichtstrahlen und

Fig. 17 bei der Einrichtung nach Fig. 16 gewonnene Messsignale.

Gleiche und einander entsprechende Bauteile in den Figuren der Zeichnung sind mit den gleichen Bezugszeichen versehen.

Nach dem Grundprinzip der erfindungsgemäßen Messvorrichtung wird die Abtastrate durch die maximale Umdrehungsgeschwindigkeit der Spiralschlitz-Scheibe DS begrenzt. Die Abtastrate lässt sich dadurch steigern, dass die Anzahl m der erzeugenden Systeme erhöht wird. Es gilt

$$\text{Abtastungen/Sekunde} = m \cdot \text{Umdrehungen/Sekunde.}$$

Die Anzahl m der erzeugenden Systeme kann dadurch erhöht werden, dass

a) die Anzahl n der Spalten, die pro Umdrehung der Scheibe mit dem Spiralschlitz sich bewegende Lochblenden bilden und/oder
b) die Anzahl k der Spiralschlitze, die pro Umdrehung der Scheibe mit einem Spalt sich bewegende Lochblenden bilden, erhöht wird.

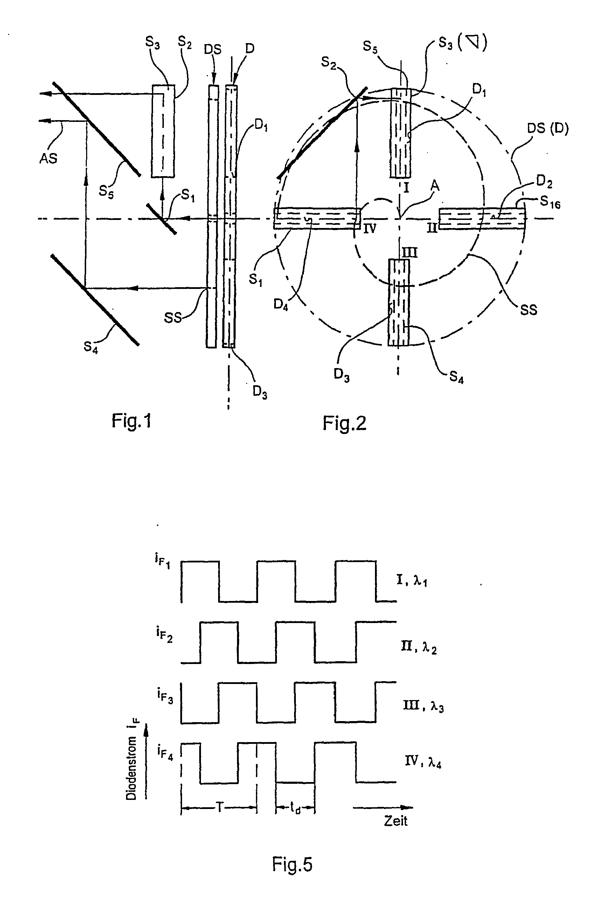

Nachfolgend soll beispielhaft die Vervierfachung der Abtastrate nach a) unter Bezug auf die Fig. 1-5 näher erläutert werden.

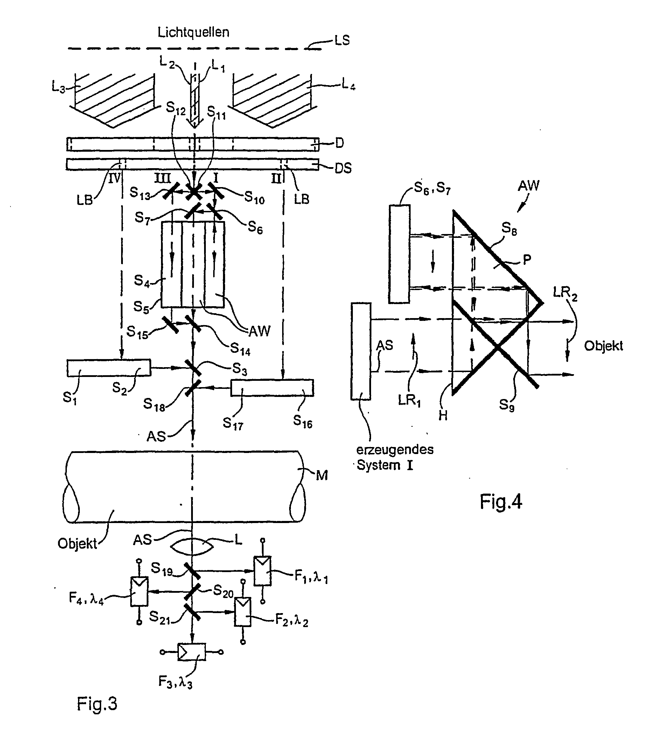

Die Fig. 1-3 zeigen eine Vorrichtung zur Messung von Außen-, Innenabmessungen und Abständen von Messobjekten (M). Die Vorrichtung umfasst vier Lichtquellen $L_1$, $L_2$, $L_3$, $L_4$ und wenigstens ein Linsensystem (LS) zur Erzeugung eines Parallellichtbündels aus den Lichtstrahlen der Lichtquellen. Das Parallellichtbündel fällt auf eine Spaltblende D mit vier Spalten $D_1$, $D_2$, $D_3$, $D_4$ vor der in Lichtstrahlrichtung gesehen eine Spiralschlitz-Scheibe DS angeordnet ist, die um eine Drehachse A drehbar ist. Das Linsensystem (LS) zur Erzeugung eines parallelen Lichtbandes kann, wie in der Fig. 3 dargestellt, vor der Spaltblenden/Spiralschlitzscheiben-Anordnung (D/DS), aber auch dahinter angeordnet sein zur Parallelisierung der abtastenden Strahlen. Die Scheibe DS weist einen den Spalt der Spaltblende schneidenden Spiralschlitz SS auf, der die Form einer archimedischen Spirale hat, die der Gleichung r = c · φ gehorcht, wobei r der Radius der Spirale, c der Quotient aus der Lichtstrahlabtastgeschwindigkeit bzw. Lichtpunktgeschwindigkeit $v_L$ und der Winkelgeschwindigkeit ω der sich drehenden Scheibe (c = $v_L$/ω) und der Drehwinkel der Scheibe ist. Durch das Zusammenwirken von Spalt und Spiralschlitz entsteht eine Lochblende LB, die bei Drehung der Scheibe mit konstanter Drehzahl entlang dem Spalt mit konstanter Geschwindigkeit bewegt wird. Die Vorrichtung umfasst ferner vier Fotodioden $F_1$, $F_2$, $F_3$, $F_4$, auf welche die die Lochblende durchsetzenden und das Messobjekt abtastenden Lichtstrahlen AS gelenkt werden. Das Messobjekt M ist in Strahlrichtung gesehen vor der Lochblende angeordnet. Die Ausgangssignale der Fotodioden sind einer Auswerteeinrichtung (nicht dargestellt) zugeführt, die die Zeit misst, in der die Lichtstrahlen das Messobjekt abtasten und aus den gemessenen Zeiten, die diesen Zeiten proportionalen Außenabmessungen, Innenabmessungen und Abstände des Messobjektes bzw. der Messobjekte ermittelt.

Die vier Spalte $D_1$, $D_2$, $D_3$, $D_4$ der Spaltblende D sind radial um die Drehachse A angeordnet. Für jeden Spalt ist eine Lichtquelle $L_1$, $L_2$, $L_3$, $L_4$ vorgesehen, die Licht mit lichtquellenspezifischen Merkmalen aussendet, z. B. Licht mit unterschiedlichen Wellenlängen $\lambda_1$, $\lambda_2$, $\lambda_3$, $\lambda_4$ oder Licht einer Wellenlänge mit unterschiedlichen frequenzmodulierten Lichtamplituden $LA_1$, $LA_2$, $LA_3$, $LA_4$.

Bei der Vorrichtung nach den Fig. 1-3 sind somit vier erzeugende Systeme I, II, III und IV vorgesehen. Jedes erzeugende System besteht aus einer Lichtquelle, einem Spalt der Spaltblende und der gemeinsamen Spiralschlitz-Scheibe DS.

Der Abtastlichtstrahl des erzeugenden Systems III wird mit Spiegeln $S_4$ und $S_5$ sowie der Abtastlichtstrahl des erzeugenden Systems IV mit Spiegeln $S_1$, $S_2$ und $S_3$ in die Strahlebene des erzeugenden Systems I gespiegelt. Die optischen Komponenten der erzeugenden Systeme I und II sind aus Gründen der Übersichtlichkeit nicht dargestellt. Die optischen Komponenten und der Strahlengang für das erzeugende System II sind achsensymmetrisch zum System IV angeordnet.

Die Fig. 3 zeigt, dass für eine Vervierfachung der Abtastrate vier Lichtquellen mit lichtquellenspezifischen Merkmalen, z. B. mit den Wellenlängen $\lambda_1$, $\lambda_2$, $\lambda_3$, $\lambda_4$ verwendet werden. Der Abtastlichtstrahl des erzeugenden Systems I mit der Wellenlänge $\lambda_1$ wird mit Hilfe eines Spiegels $S_{12}$ und über einen Spiegel $S_{10}$ auf einen Abtastrichtungswechsler AW gelenkt. Der Abtastrichtungswechsler besteht gemäß Fig. 4 aus einem rechtwinklig gleichschenkligen Prisma P, auf dessen Hypotenusenfläche H der Abtastlichtstrahl AS senkrecht fällt, dessen Abtastrichtung $LR_1$ durch 180°-Knickung des Strahlenweges umgekehrt wird. Der in seiner Abtastrichtung umgekehrt aus dem Prisma austretende Abtastlichtstrahl wird durch zwei unter einem Winkel von 90° gegeneinander geneigte Spiegel $S_6$ und $S_7$ auf eine Parallelspiegelanordnung $S_8$, $S_9$ gelenkt, die den in seiner Abtastrichtung umgekehrten Abtaststrahl (Abtastrichtung $LR_2$) in die Ebene des einfallenden Abtastlichtstrahls umlenkt, also wieder in die Strahlebene des Systems I. Der Strahl passiert in Richtung Messobjekt teildurchlässige Spiegel $S_{14}$, $S_3$ und $S_{18}$.

Als Abtastrichtungswechsler können auch eine Stablinse, bei der die Brennweiten und Hauptpunkte im Unendlichen liegen und sich die Strahlen im Zentrum der Linse schneiden, oder eine teleskopische Einrichtung verwendet werden.

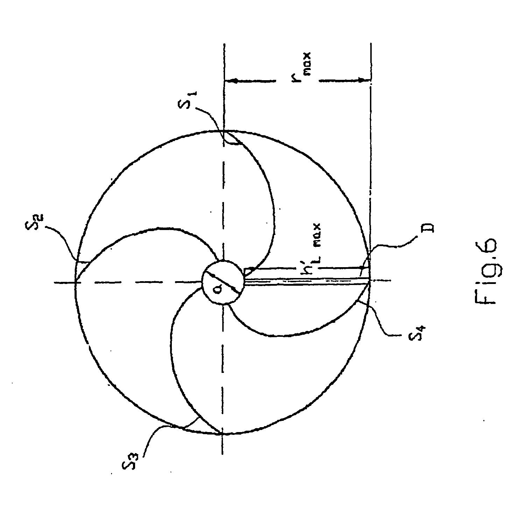

Der Abtastlichtstrahl des erzeugenden Systems III mit der Wellenlänge $\lambda_3$ wird mit Spiegeln $S_{11}$ und $S_{13}$ in eine Parallelspiegelanordnung $S_4$, $S_5$ gelenkt, vgl. Fig. 1 und 3, angehoben und mit Spiegeln $S_{15}$ sowie $S_{14}$ in die Strahlebene des Systems I gespiegelt. Die Abtastlichtstrahlen der erzeugenden Systeme II und IV mit den Wellenlängen $\lambda_2$ und $\lambda_4$ gelangen ebenfalls (siehe Fig. 1-2) mittels Spiegel $S_{16}$, $S_{17}$, $S_{18}$ sowie $S_1$, $S_2$ und $S_3$ in die Strahlebene des Systems I. Alle vier Abtastlichtstrahlen überstreichen das Messobjekt M an der gleichen Stelle in einem Zeitabstand von T/4. Hinter dem Messobjekt werden die Strahlen der vier sich exakt überlagernden Messfelder mittels einfacher Linsenoptik L auf Punktgröße fokussiert. Sind die sender- bzw. lichtquellenspezifischen Merkmale unterschiedliche Wellenlängen, so werden diese mit Hilfe von Spiegeln $S_{19}$, $S_{20}$ und $S_{21}$, deren Reflexion wellenlängenabhängig ist, gemäß den Wellenlängen separiert und auf Fotodioden $F_1$, $F_2$, $F_3$ und $F_4$ gelenkt. Sind die lichtquellenspezifischen Merkmale unterschiedliche frequenzmodulierte Lichtamplituden, so erfolgt die Signalseparierung elektronisch mittels Frequenzweichen hinter der Diode, die Licht aller vier Sender bzw. Lichtquellen empfängt, in der elektronischen Auswerteeinrichtung. Die Signalströme der Fotodioden bzw. nach der Frequenzseparierung in der Auswerteeinrichtung sind in der Fig. 5 dargestellt. Es ist ersichtlich, dass im T/4-Zeitabstand ein Messwert, der der Schattenzeit $t_d$ proportional ist, erzeugt wird. Bei einer Rechtsdrehung der Spiralschlitz-Scheibe DS werden die Durchmessersignale nacheinander von den erzeugenden Systemen III, IV, I, II, III, IV, I usw. erzeugt. Wenn in der Praxis eine Durchmesserermittlung genügt, bei der die abtastenden Strahlen der einzelnen erzeugenden Systeme jeweils voneinander um einige Millimeter objektseitig axial versetzt sein dürfen, genügt die Messung mit Licht nur eines Merkmals, beispielsweise nur einer Wellenlänge. Das Messfeld kann verdoppelt werden, indem gemäß Fig. 6 das Messfeld zwischen $F_{18}$ und dem Messgut in Fig. 3 mittels eines Strahlenteilers senkrecht zur Längsachse des Messgutes auf einen Spiegel gelenkt wird, der das zweite Messfeld ($x_2$) an das erste Messfeld ($x_1$) angrenzend in die Messachse des ersten Messfeldes spiegelt. In diesem Fall sind die in Fig. 3 empfängerseitig dargestellten Komponenten zu verdoppeln und die Signale mit gleichen Lichtquellenmerkmalen ($\lambda$) als Ausgangssignal des Durchmessers $d_\lambda = x_{1'\lambda} + x_{2'\lambda}$ zusammenzufassen, wobei $x_{1'\lambda}$ und $x_{2'\lambda}$ abgetastete Objektstrecken sind.

Gemäß oben angegebener Formel (Abtastungen/sec = m · Umdrehungen/sec) lässt sich durch eine Erhöhung der Zahl m der erzeugenden Systeme eine weitere Steigerung der Abtastrate erzielen unter der Bedingung, dass die Spalten auf dem Umfang der der Spiralschlitz-Scheibe vorgelagerten Spaltblende (D) voneinander einen äquidistanten Abstand haben. Die Anzahl der erzeugenden Systeme lässt sich dadurch erhöhen, dass weitere Spalte in der Spaltblende strahlenförmig von der Achse A ausgehend im gleichen Bogenmaßabstand voneinander vorgesehen werden. Dabei ist die Anzahl der erzeugenden Systeme gleich der Anzahl der Spalte. Zusätzliche erzeugende Systeme können die Funktionen und Einsatzbreite der beschriebenen Vorrichtung erheblich erweitern, z. B. durch die Erfassung von Außenabmessungen in verschiedenen Ebenen oder in verschiedenen Achsen einer Ebene und die Kombination aus Erhöhung der Messfrequenz und der Messachsen, wobei gilt:

$$\text{Anzahl der erzeugenden Systeme } m = i \cdot j$$

mit i = die für die Messfrequenzerhöhung erforderliche Anzahl der erzeugenden Systeme = Multiplikationsfaktor der Grundmessfrequenz (Umdrehungen/sec) und j = die für die Erhöhung der Anzahl der Messachsen oder Messebenen erforderliche Anzahl der erzeugenden Systeme.

Nachfolgend soll die Vervielfachung der Abtastrate mit Hilfe einer Scheibe, die entsprechend der zuvor aufgeführten Variante b) k Spiralschlitze aufweist, erläutert werden.

Der Spiralschlitz in der Scheibe DS wird mathematisch beschrieben mit $r = c \cdot \varphi$ (1) und es gilt $c = v_{LP}/\omega$. Wenn für die Lichtpunktgeschwindigkeit $v_{LP} = h_{Lmax} \cdot n/60$ [m/sec] (n = Umdrehungen/min) und für die Kreisfrequenz $\omega = 2\pi \cdot n/60$ [sec] eingesetzt wird, gilt $r = (h_{Lmax}/2\pi) \cdot \varphi$ (2) mit der Steigung $c = h_{Lmax}/2\pi$; $h_{Lmax}$ = maximaler Lichtpunkthub.

Die Entfernung des Lichtpunktes vom Spiralmittelpunkt ist maximal nach einer Scheibenumdrehung $\varphi = 2\pi$, so dass gilt $r_{max} = h_{Lmax}$. Werden k Spiralschlitze in der Scheibe DS vorgesehen, die einen äquidistanten Drehwinkelabstand $\varphi_k$ voneinander haben, und $r_{max} = h_{Lmax}$ schon nach $\varphi = 2\pi/k$ erreicht werden soll, so muss gelten

$$r_{max} = (k \cdot h_{Lmax}/2\pi) \cdot 2\pi/k$$

und die Spiralgleichung lautet für $0 \leq \varphi \leq 2\pi/k$

$$r = (k \cdot h_{Lmax}/2\pi) \cdot \varphi \quad (3)$$

Z. B. sind für eine Vervierfachung der Abtastrate 4 äquidistante Spiralen in der Scheibe erforderlich (Fig. 6), die gemäß (3) eine 4-fache Steilheit $c = 2 \cdot h_{Lmax}/\pi$ aufweisen. In Fig. 6 wird der maximale Lichtpunkthub um den Nabenradius a/2 verkürzt. Funktionell ergeben sich pro Umdrehung der Scheibe und pro Spalt k bzw. im Beispiel 4 Abtaststrahlen erzeugende Systeme. Werden Spalten n und Spiralschlitze k wie oben angegeben funktionell kombiniert, so gilt:

$$\text{Abtastungen/sec} = k \cdot n \cdot \text{Umdrehungen/sec.}$$

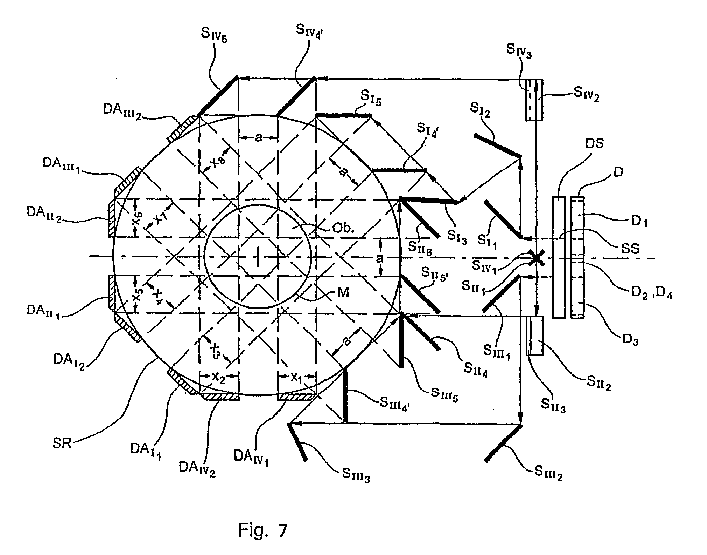

Anhand der Fig. 7 soll eine Vorrichtung zur gleichzeitigen Erfassung von Außenabmessungen in verschiedenen Ebenen bzw. einer Ebene in verschiedenen Achsen beschrieben werden. Jedes Abtaststrahlen erzeugende System der Messvorrichtung kann zur Messung von Außenabmessungen in einer Ebene herangezogen werden, so dass allgemein gilt:

```
Anzahl der Messebenen bzw. Messachsen =
Anzahl der erzeugenden Systeme.
```

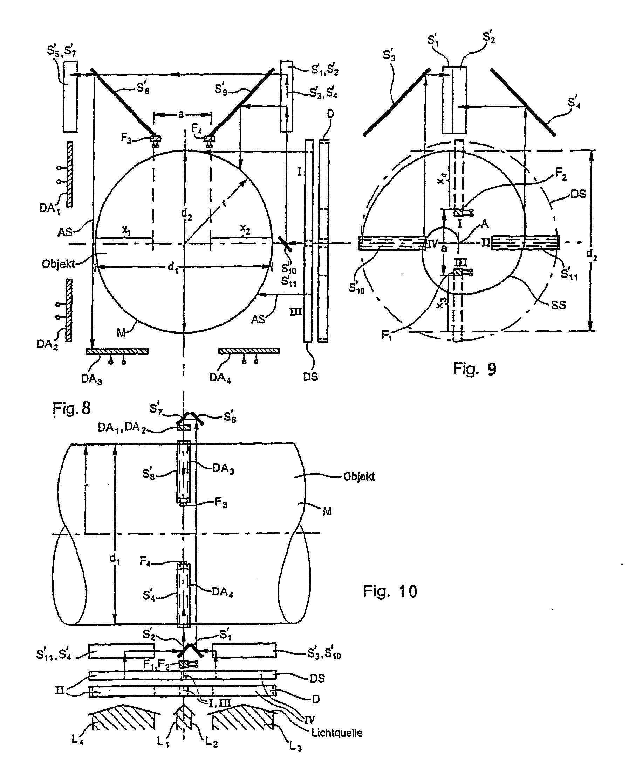

Anhand der Fig. 7 soll gezeigt werden, wie mit vier Abtaststrahlen erzeugenden Systemen I-IV in einer Ebene vier Rohrdurchmesser in vier Achsen gemessen werden können, beispielsweise zur Messung der Ovalität eines Rohres. Die Abtastlichtstrahlen erzeugenden Systeme I, II, III und IV sind kenntlich gemacht durch Spalte $D_1$, $D_2$, $D_3$ und $D_4$ der Spaltblende D sowie der Spiralschlitz-Scheibe DS. Licht des Systems I fällt auf Spiegel $S_{I1}$, $S_{I2}$ und $S_{I3}$ und einen Strahlenteiler (50 % Transmission) $S_{I4'}$, der den Strahl mit Hilfe eines Spiegels $S_{I5}$ auf Messfelder $x_3$ und $x_4$ aufteilt. Licht des Systems II wird mittels eines Spiegels $S_{II1}$ auf eine Spiegelkombination $S_{II2}$ / $S_{II3}$ gelenkt, die die Strahlen parallel zur Spiralschlitz-Scheibe und dann lotrecht auf einen Spiegelhalterungsring SR und das Messobjekt M ausrichtet (s. auch Fig. 9). Der Spiegel $S_{II\,4}$ lenkt den abtastenden Strahl auf einen Strahlenteiler $S_{II\,5'}$, der den Strahl mit Hilfe eines Spiegels $S_{II\,6}$ auf Messfelder $x_5$ und $x_6$ aufteilt. Licht des Systems III wird mittels Spiegel $S_{III\,1}$, $S_{III\,2}$ und $S_{III\,3}$ auf einen Strahlenteiler $S_{111\,4'}$ gelenkt, der das Licht mit Hilfe eines Spiegels $S_{III\,5}$ auf Messfelder $x_7$ und $x_8$ aufteilt. Licht des Systems IV wird mittels eines Spiegels $S_{IV\,1}$ auf eine Spiegelkombination $S_{IV\,2}$ / $S_{IV\,3}$ gelenkt, die analog der Spiegelkombination $S_{II\,2}$ / $S_{II\,3}$ den Strahl auf einen Strahlenteiler $S_{IV\,4'}$ lenkt, der über einen Spiegel $S_{IV\,5}$ den Strahl auf Messfelder $x_1$ und $x_2$ aufteilt. Die Strahlen werden mit Fotoelementen bzw. Linsen-Fotodiodensystemen $DA_{I\,1}$, $DA_{I\,2}$, $DA_{II\,1}$, $DA_{II\,2}$, $DA_{III\,1}$, $DA_{III\,2}$, $DA_{IV\,1}$ und $DA_{IV\,2}$ im Bereich der Messfelder $x_1$-$x_8$ detektiert, wobei die römischen Indices auf die Abtaststrahlen erzeugenden Systeme I bis IV Bezug nehmen. Die Anordnung ist vorzugsweise so gewählt, dass vier Messfeldpaare $x_1$, $x_2$; $x_3$, $x_4$; $x_5$, $x_6$; $x_7$, $x_8$ gebildet sind, die etwa kreisförmig angeordnet sind, wobei benachbarte Messfeldpaare um einen Winkel von 45° gegeneinander versetzt angeordnet sind. Die Messobjektdurchmesser aus den winklig versetzten Messfeldern ergeben sich zu

$$d_I \;=\; a \;+\; x_{3'} \;+\; x_{4'}$$

$$d_{II} \;=\; a \;+\; x_{5'} \;+\; x_{6'}$$

$$d_{III} \;=\; a \;+\; x_{7'} \;+\; x_{8'}$$

$$d_{IV} \;=\; a \;+\; x_{1'} \;+\; x_{2'},$$

wobei $x_{1'}$ bis $x_{8'}$ die jeweiligen abgetasteten Objektstrecken sind und a der vorgegebene Spaltabstand ist, vgl. auch Fig. 8 und 9.

Bei der Vorrichtung nach Fig. 7 wird die Lichtleistung durch die Strahlteiler halbiert, was bei Verwendung von Laserlicht unproblematisch ist.

Anhand der Vorrichtungen nach den Fig. 8-12 wird gezeigt, wie vier Abtaststrahlen erzeugende Systeme I-IV zur Messung zweier Rohrdurchmesser in einer Ebene in zwei Messachsen verwendet werden können, was sinnvoll sein kann bei Lichtquellen mit geringer Lichtleistungsdichte, wenn beispielsweise keine Laser eingesetzt werden.

Erzeugende Systeme I und III erzeugen Abtastlichtstrahlen AS, deren Abtastrichtung in einer senkrechten Ebene senkrecht zur Achse A der Spiralschlitz-Scheibe DS verläuft, siehe Fig. 8 und 9. Bei Rechtsdrehung der Spiralschlitz-Scheibe ist die Laufrichtung vom Scheibenmittelpunkt A von innen nach außen gerichtet, vgl. Fig. 8, 9. Fotodioden $F_1$ und $F_2$, die etwa mit dem radial inneren Ende der Spalte $D_1$ und $D_3$ der Spaltblende D ausgerichtet sind, bilden bei Belichtung durch jeweils einen Strahl der erzeugenden Systeme I und III die Startzeiten der abtastenden Strahlen elektrisch ab. Der Abtastvorgang beider Systeme endet, wenn der jeweilige Abtaststrahl AS die Oberfläche des Messobjektes M gerade überstreicht und ein Fotoelement $DA_1$ bzw. $DA_2$, das in Strahlrichtung gesehen hinter dem Messobjekt M angeordnet ist, belichtet, vgl. Fig. 8.

Die Zeitdifferenz zwischen Start und Ende des Abtastvorgangs ist bei bekannter konstanter Abtastgeschwindigkeit (Laufgeschwindigkeit des Lichtpunktes) proportional den Strecken $x_3$ und $x_4$, vgl. Fig. 9.

Die Strahlen der erzeugenden Systeme II und IV werden mit den Spiegeln $S_{10'}$ und $S_{11'}$ auf die Spiegel $S_{3'}$

und $S_4'$ gelenkt. Von dort gelangen die Strahlen auf die Spiegel $S_1'$ und $S_2'$. Ein Spiegel $S_9'$ lenkt die Strahlen, die von $S_2'$ kommen, rechtwinklig in die Messebene unterhalb des Spiegels $S_9'$ um und die Strahlen, die vom Spiegel $S_1'$ kommen, werden über Spiegel $S_6'$ und $S_7'$ auf den Spiegel $S_8'$ umgelenkt, der die Strahlen rechtwinklig in die Messebene unterhalb des Spiegels $S_8'$ umlenkt, so dass das doppelte Messfeld unter den Spiegeln $S_8'$ und $S_9'$ überstrichen wird. Die Abtastrichtung dieser Strahlen verläuft senkrecht zur Abtastrichtung der Strahlen der Systeme I und III. Fotodioden $F_3$ und $F_4$ (Fig. 8), die in Abtastrichtung am Ende der Abtastwege in einem vorgegebenen Abstand a zueinander angeordnet sind, übermitteln jeweils die Endzeitpunkte der Abtastvorgänge, so dass bis zum Belichten von Fotoelementen $DA_3$ und $DA_4$, die in Strahlrichtung gesehen hinter dem Messobjekt M angeordnet sind, die Strecken $x_1$ sowie $x_2$ abgetastet werden. Bei einem bekannten Fotodiodenabstand a zwischen $F_1$ und $F_2$ bzw. $F_3$ und $F_4$ errechnet sich der Messobjekt-Durchmesser $d_1$ in der horizontalen Ebene und der Messobjekt-Durchmesser $d_2$ in der vertikalen Ebene zu

$$d_1 = a + x_1 + x_2$$

$$d_2 = a + x_3 + x_4,$$

wobei die kleinen Objektdurchmesser etwas größer als a sein müssen. Ist der Objektdurchmesser gleich oder kleiner als a und ist a kleiner als eine Spaltlänge $LS_1$, $LS_2$, $LS_3$ und/oder $LS_4$, so reicht das Messfeld eines erzeugenden Systems zur Bestimmung des Durchmessers aus. Der Fotodiodenabstand a ist gleich der Differenz aus dem Doppelten maximalen Abstand des Spiralschlitzes vom Spiralschlitz-Mittelpunkt und dem Doppelten des maximalen Lichtpunkthubes, was dem Abstand der beiden diametral bezüglich der Drehachse A einander gegenüber angeordneten Spalte $D_1$, $D_3$ und $D_2$, $D_4$ entspricht. Der maximale Lichtpunkthub entspricht der Länge eines Spaltes. Die Messung der vier Radien erfolgt im Zeitabstand von T/4, wobei T die Zeit pro Spiralschlitz-Scheibenumdrehung ist. Bei einer Nenndrehzahl von 24.000 $min^{-1}$ würde der zeitliche Versatz der Messvorgänge T/4 = 626 $\mu sec$ betragen.

Jedes Fotoelement der Fotoelemente $DA_1$-$DA_4$ kann durch eine Linse und eine Fotodiode ersetzt werden, auf die die Linse das Licht fokussiert.

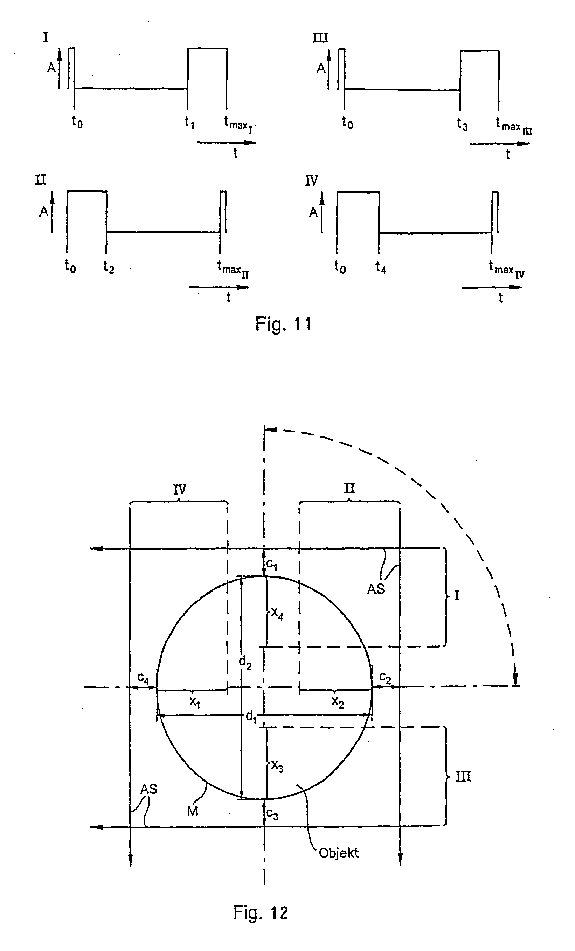

Anhand der Fig. 11 und 12 soll noch die Messung der Abstände zwischen Objektkanten und Messfeldgrenzen erläutert werden. Gemäß den Fig. 8-10 stellen sich die Ausgangssignale der Fotoelemente $DA_1$-$DA_4$ der Systeme I-IV wie in der Fig. 11 gezeigt dar. Die Messlängen $L_S$ der erzeugenden Systeme I-IV betragen:

erzeugendes System I: $L_{S1} = x_4 + c_1$
erzeugendes System II: $L_{S2} = x_2 + c_2$
erzeugendes System III: $L_{S3} = x_3 + c_3$
erzeugendes System IV: $L_{S4} = x_1 + c_4$

Die Größen $c_1$ bis $c_4$ sind die Abstände zwischen den Messfeldrändern und den Objektkanten. Sie sind gegeben für die Systeme I und III durch die Zeitdifferenzen $t_{max\ I} - t_1$ und $t_{max\ III} - t_3$. Für die Systeme II und IV sind die Zeitdifferenzen $t_2 - t_0$ und $t_4 - t_0$ mit $t_0 = 0$ gegeben. Die Größen $c_1$ bis $c_4$ ergeben sich dann wie folgt:

$$c_1 = v_L \cdot (t_{max\ I} - t_1)$$

$$c_2 = v_L \cdot (t_2 - t_0)$$

$$c_3 = v_L \cdot (t_{max\ III} - t_3)$$

$$c_4 = v_L \cdot (t_4 - t_0),$$

wobei $t_{max}$ die Laufzeit des Lichtpunktes bzw. des Abtastlichtstrahls über die gesamte Spaltlänge ist.

In der Fig. 12 sind die Umfangskanten vom Messfeldende bei vier erzeugenden Systemen I-IV auf dem Umfang mit π/4-Abstand dargestellt. Eine vollständige Erfassung des Umfangsabstandes vom Messfeldende ist möglich, wenn bei vier erzeugenden Systemen die Messvorrichtung um π/4 auf einer Kreisbahn um den Kreuzungspunkt der Mittellinien des horizontalen Messfeldes II und IV und des vertikalen Messfeldes I und III als Mittelpunkt geschwenkt wird.

Wenn die Spalten $D_1$-$D_4$ der Spaltblende D der Abtaststrahlen erzeugenden Systeme I-IV der oben beschriebenen Vorrichtung mit flächigen Empfängerdioden versehen werden, können Innen- und Außenabmessungen auch im Reflexionsverfahren in einem Messvorgang, d. h. während einer Umdrehung der Spiralschlitz-Scheibe DS, ermittelt werden.

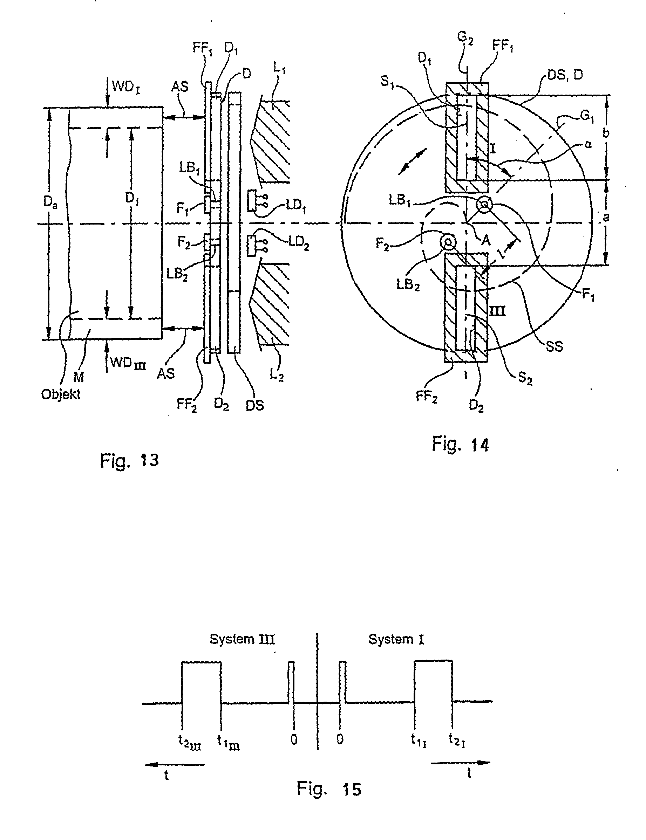

Die Fig. 13 und 14 zeigen eine Ausführungsform der Vorrichtung, mit der mit zwei Abtaststrahlen erzeugenden Systemen I und III die Außen- und Innendurchmesser sowie die Wandstärken von Rohren in einer Ebene gemessen werden können.

Die erzeugenden Systeme I und III mit Lichtquellen $L_1$ und $L_2$ erzeugen Abtastlichtstrahlen AS mit der Abtastrichtung parallel zur Achse (A) der Spiralschlitz-Scheibe DS. Die Abtastlichtstrahlen treffen auf die Stirnseite eines Messobjektes (M), hier eines Rohres, vgl. Fig. 13. Eine Spaltblende D mit Spalten $D_1$, $D_2$ ist in Strahlrichtung gesehen hinter der Spiralschlitz-Scheibe DS angeordnet. Die Spalte $D_1$ und $D_2$ sind mit flächigen Empfängerdioden $FF_1$ und $FF_2$ umgeben. Die am Objektmaterial reflektierten Abtastlichtstrahlen der erzeugenden Systeme I und III treffen auf die die Spalten $D_1$, $D_2$ umgebenden Empfängerdioden $FF_1$ und $FF_2$ und erzeugen während des Reflexionsvorganges Ausgangssignale mit der Signaldauer $t_{1I}$ bis $t_{2I}$ und $t_{1III}$ bis $t_{2III}$, vgl. Fig. 15.

Auf einer unter einem Winkel α zur die Spalte $D_1$, $D_2$ verbindenden Gerade $G_2$ verlaufenden Geraden $G_1$ durch die Drehachse A der Spaltblende D sind beiderseits der Drehachse jeweils eine Lochblende $LB_1$ und $LB_2$ in der Spaltblende ausgebildet. Die Lochblenden $LB_1$, $LB_2$ weisen einen vorgebbaren Abstand $l = a/2 - r_{max}/((90 - α)/360)$ von der Drehachse A auf, mit $r_{max}$ = maximaler Abstand des Spiralschlitzes vom Spiralschlitz-Mittelpunkt bzw. von der Drehachse A und α = vorgebbarer Winkel zwischen der die Lochblenden verbindenden Gerade $G_1$ und der die Spalte $D_1$, $D_2$ verbindenden Gerade $G_2$. Bei α = 45° beträgt der Abstand $a/2 - r_{max}/8$ vom Mittelpunkt der Spiralschlitz-Scheibe mit a = Abstand der Spalte $D_1$ und $D_2$, vgl. Fig. 14. Die Lochblenden erzeugen mit Hilfe des Spiralschlitzes SS und Leuchtdioden $LD_1$ und $LD_2$ in Fotodioden $F_1$ und $F_2$ elektrische Impulse, die die Startzeitpunkte $t = 0$ der Abtastvorgänge über die Spaltlängen b der Spalte $D_1$, $D_2$ markieren. Die Abtastgeschwindigkeit $v_L$ ist mit $v_L = r_{max} \cdot n/60$ [m/Sekunde] bekannt; n ist die Zahl der Umdrehungen der Spiralschlitz-Scheibe pro Minute, $r_{max}$ in [m]. Beginn und Ende der Reflexionszeiten sind gemäß Fig. 15 für System I mit $t_{1I}$ und $t_{2I}$ sowie für das System III mit $t_{1III}$ und $t_{2III}$ angegeben. Die genannten Zeitpunkte sind ebenfalls Endzeitpunkte digitaler Impulszählungen, die bei $t = 0$ begonnen haben und somit mit ihren Impulssummen als proportionale Zeitgrößen dargestellt werden können.

Der Außendurchmesser $D_a$, der Innendurchmesser $D_i$ sowie die Wanddicken $WD_I$ und $WD_{III}$ errechnen sich bei gegebenem Spaltenabstand a wie folgt:

$$D_a = a + v_L (t_{2I} + t_{2III})$$

$$D_i = a + v_L (t_{1I} + t_{1III})$$

$$WD_I = v_L (t_{2I} - t_{1I})$$

$$WD_{III} = v_L (t_{2III} - t_{1III})$$

Mit zusätzlichen Abtastlichtstrahlen erzeugenden Systemen, z. B. Systemen II und IV gemäß oben beschriebener Vorrichtung lassen sich wie für die erzeugenden Systeme I und III beschrieben gleichzeitig zusätzliche Außen- und Innenabmessungen sowie Wanddicken in einer zweiten Messebene bzw. zweiten Messachse der gleichen Ebene ermitteln.

Anders als oben beschrieben, kann die weitere Lichtquelle bzw. können die weiteren Lichtquellen $LD_1$, $LD_2$ auf der gemeinsamen Drehachse A zusammen mit der Spaltblende D, mit der sie drehfest verbunden ist, relativ zur Spiralschlitz-Scheibe DS mit der gemeinsamen Winkelgeschwindigkeit $ω_D$ gedreht werden. Die Spiralschlitz-Scheibe DS dreht mit der Winkelgeschwindigkeit $ω_{DS}$. Hieraus ergibt sich für einen relativen Drehwinkel $Φ = Φ_{DS} - Φ_D$. Die Dauer eines kompletten Abtastvorganges $t_A$ ergibt sich aus dem maximalen relativen Drehwinkel $Φ = 2π$ und den Winkelgeschwindigkeiten $ω_{DS}$ und $ω_D$, die proportional zu den Drehzahlen $n_{DS}$ und $n_D$ der Spiralschlitz-Scheibe DS und der Anordnung Lichtquelle/Spaltblende $LD_1$, $LD_2$, D sind, zu

$$t_A = 2\pi/(\omega_{DS} - \omega_D) = 1/(f_{DS} - f_D)$$

mit $f_{DS}$ und $f_D$ in Umdrehungen/sec.

Hieraus ergibt sich der gemeinsame Drehwinkelfortschritt $\Phi_U$ von Spaltblende D und Lichtquelle $LD_1$, $LD_2$ während eines Abtastvorganges zu $\Phi_U = t_A \cdot 360° \cdot f_D$. Der Messobjekt-Umfang wird nach einer Zeit $T_D/m = (1/f_D)/m$ vollständig abgetastet, wobei $T_D = 1/f_D$ die Zeit für eine Umdrehung der Spaltblende/Lichtquelle und m die Zahl der erzeugenden Systeme ist.

Nachfolgend soll ein spezielles Beispiel gegeben werden:

Die Drehzahl $n_D$ der Spaltblendenscheibe sei $n_D = 30$ min$^{-1}$, was $f_D = 0{,}5$ sec$^{-1}$ entspricht, also 0,5 Umdrehungen/sec. Die Zeit $T_D$ pro Umdrehung beträgt dann $T_D = 2$ sec.
Die Drehzahl $n_{DS}$ der Spiralschlitz-Scheibe sei $n_{DS} = 6.000$ min$^{-1}$, was $f_{DS} = 100$ sec$^{-1}$ entspricht.
Die Zeit $T_{DS}$ pro Umdrehung beträt dann $T_{DS} = 10$ ms.
Die Dauer $t_A$ eines Abtastvorgangs errechnet sich dann zu $t_A = 1/(100 - 0{,}5) = 10{,}05$ ms.
Der Drehwinkelfortschritt $\Phi_U$ während eines Abtastvorgangs in Umfangsrichtung beträgt

$$\Phi_U = 10{,}05 \cdot 10^{-3} \text{ sec} \cdot 360° \cdot 0{,}5 \text{ sec}^{-1} = 1{,}81°.$$

Der Objektumfang ist nach $T_D/2 = 1$ sec abgetastet, da gleichzeitig an zwei Stellen auf dem Umfang Wanddicke gemessen werden. In dieser Zeit werden also Wanddicken ca. hundert mal und Außen- und Innendurchmesser ca. fünfzig mal bestimmt.

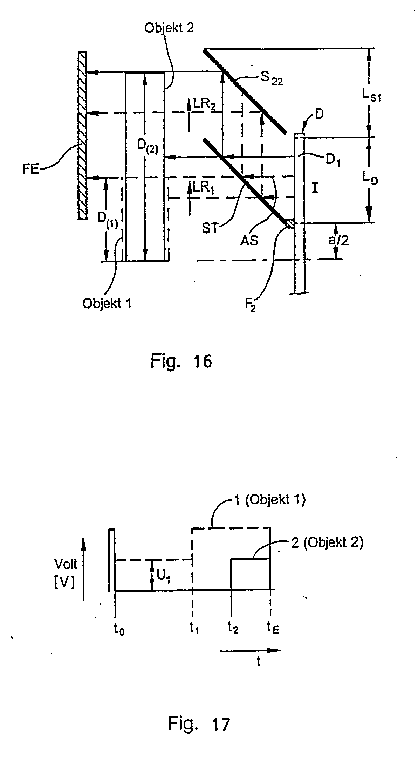

Um auch Messungen an Messobjekten vornehmen zu können, deren Abmessungen größer sind als die Länge der Spalte der Spaltblende, ist eine Einrichtung zur optischen Aufweitung der Abtastlichtstrahlen AS für jedes erzeugende System I, II, III, IV vorgesehen. Dies soll anhand der Fig. 16 und 17 näher erläutert werden.

Die Fig. 16 zeigt eine Einrichtung zur Aufweitung der Abtastlichtstrahlen AS, die wenigstens einen unter einem Winkel von 45° zur Abtaststrahlrichtung angeordneten Strahlteiler ST aufweist, der zwischen der Spaltblende D und dem Messobjekt M angeordnet ist, sowie einen unter einem Winkel von 45° zur Abtaststrahlrichtung und parallel zum Strahlteiler ST sowie in Spaltrichtung um die Spaltlänge $L_D$ versetzt angeordneten Spiegel $S_{22}$. Auf diesen Spiegel $S_{22}$ fallen die vom Strahlteiler ST reflektierten Abtaststrahlen. Der Spiegel $S_{22}$ lenkt die Abtaststrahlen unter Beibehaltung der Abtastrichtung und der Abtastebene auf das Messobjekt um. In der Fig. 16 ist die Strahlaufweitung nur für ein erzeugendes System I, von dem nur der Spalt $D_1$ der Spaltblende D gezeigt ist, dargestellt. Die Spaltblende D des Abtaststrahlen erzeugenden Systems I ist am unteren Rand des Spaltes $D_1$ mit einer Fotodiode $F_2$ versehen. Bei Beleuchtung durch den abtastenden Strahl signalisiert sie den Beginn der Bewegung des erzeugenden Strahls im Spalt der Spaltblende (Beginn des Lichtpunkthubes). Der abtastende Strahl trifft dann auf den um 45° geneigten Strahlteiler ST, der 50 % Strahlintensität durchlässt und 50 % rechtwinklig zum einfallenden Strahl auf den Spiegel $S_{22}$ reflektiert. Dieser Spiegel $S_{22}$ erzeugt einen zweiten abtastenden Strahl, der sich parallel und zeitgleich zum ersten abtastenden Strahl bewegt. Auf diese Weise entstehen zwei gleich große übereinander angeordnete Messfelder, die gemeinsam ein erzeugendes System, hier das System I, als Ursprung haben. Je nach Größe des Objektes treffen ein oder zwei abtastende Strahlen auf ein Fotoelement (FE), das in Strahlrichtung gesehen hinter dem Messobjekt M angeordnet ist.

In der Fig. 17 ist das Startsignal der Fotodiode $F_2$ und die Signalamplitude des Fotoelementes FE während eines Abtastvorganges in beiden Messfeldern dargestellt. Befindet sich die obere Messobjektkante innerhalb des unteren Messfeldes, so entsteht ein Rechtecksignal, das von der halben maximalen Amplitude ausgeht, weil der abtastende Strahl des oberen Messfeldes das Fotoelement trifft, siehe gestrichelt dargestellter Signalverlauf 1 (Objekt 1) in der Fig. 17. Die aufsteigende Kante entsteht zum Zeitpunkt $t_1$, wenn der abtastende Strahl des unteren Messfeldes auf das Fotoelement trifft. Ragt die Objektkante in das obere Messfeld hinein, trifft nach Beginn des Abtastvorganges kein abtastender Strahl auf das Fotoelement. Erst wenn der abtastende Strahl des oberen Messfeldes die Objektkante überstreicht, entsteht eine ansteigende Flanke, die nur die halbe Amplitude erreicht und bei 0 V beginnt, was in der Fig. 17 durch das untere, durchgezogen dargestellte Signal 2 (Objekt 2) dargestellt ist. D. h., wenn eine ansteigende Signalflanke bei der halben maximalen Amplitude beginnt, so befindet sich die Messobjektkante innerhalb des unteren Messfeldes. Beginnt die ansteigende Signalflanke bei 0 V und erreicht nur das halbe Maximum, so befindet sich die Messobjektkante im oberen Messfeld. Es gilt dann für die Abmessungen der in Fig. 15 dargestellten Objekte 1 (gestrichelt dargestellt) und 2 (mit durchgezogenen Linien dargestellt):

$$D_{I\,(1)} = v_L \cdot t_1 + a/2$$

und

$$D_{I\,(2)} = v_L \cdot (t_E + t_2) + a/2$$

mit $t_0 = 0$ und $t_E$ = Dauer eines Abtastvorganges. Es soll darauf hingewiesen werden, dass hier nur die Vergrößerung des Messfeldes des erzeugenden Systems I betrachtet wird.

Wird zusätzlich das vergrößerte Messfeld des erzeugenden Systems III betrachtet, so gilt

$$D_{I/III\,(1)} = v_L \cdot (t_{I\,1} + t_{III\,1}) + a$$

und

$$D_{I/III\,(2)} = v_L \cdot (2t_E + t_{I\,2} + t_{III\,2}) + a.$$

Werden die Strahlteiler und der parallel angeordnete Spiegel $S_{32}$ jeweils wenigstens 1 mal um $L_D \cdot \sqrt{2}$ verlängert, wobei $L_D$ die Länge des Spaltes ist, oder werden wenigstens ein weiterer Strahlenteiler kaskadenartig und parallel zueinander, im Abstand der Länge $L_D$ des Spaltes $D_1$ voneinander zwischen dem ersten Strahlenteiler TS und dem Spiegel $S_{22}$ angeordnet, so wird wenigstens ein dritter abtastender Strahl erzeugt, so dass wenigstens drei Abtastvorgänge gleichzeitig erfolgen. Hierdurch kann die Zahl der Abtastvorgänge und damit die Strahlaufweitung vervielfacht werden.

Das Signal des Fotoelements FE, das ohne Zuhilfenahme einer Sammellinse im erstgenannten Fall die dreifache Länge hätte, wird äquivalent zum o. a. gebildet.

Wird die konstante Signalamplitude, auf die sich das Rechtecksignal addiert, als Grundsignal ($U_0$) bezeichnet, so kann aus der Größe des Grundsignals die Lokalisation der Objektkante abgeleitet werden. Es gilt bei Nutzung eines erzeugenden Systems

| | | |
|---|---|---|
| $U_0 = 0$ | $\rightarrow$ | Objektkante im obersten Messfeld, Objekthöhe $\sim (t_3 + 2\,t_E) + a/2$ |
| $U_0 = U_1$ | $\rightarrow$ | Objektkante im mittleren Messfeld, Objekthöhe $\sim (t_2 + 2\,t_E) + a/2$ |
| $U_0 = 2U_1$ | $\rightarrow$ | Objektkante im unteren Messfeld, Objekthöhe $\sim (t_1) + a/2$ |

mit $t_1$, $t_2$, $t_3$ = Zeitpunkte der ansteigenden Flanke des Rechtecksignals, $L_D$ = Spaltlänge und a = radialer Abstand der Spalte. Weitere Messfelder lassen sich in gleicher Weise einfügen.

**Patentansprüche**

1. Vorrichtung zur Messung von Außenabmessungen, Innenabmessungen und Abständen von Messobjekten (M)

   - mit wenigstens einer Lichtquelle ($L_1$, $L_2$, $L_3$, $L_4$) und wenigstens einer Einrichtung (LS) zur Erzeugung eines Parallellichtbündels aus den Lichtstrahlen der Lichtquelle,
   - mit wenigstens einer vom Parallellichtbündel beleuchtbaren Spaltblende (D),
   - mit wenigstens einer vor oder hinter der Spaltblende (D) angeordneten Scheibe (DS), wobei die Spaltblende und die Scheibe relativ zueinander um eine gemeinsame Drehachse (A) bewegbar, insbesondere drehbar, sind und die Scheibe einen den Spalt der Spaltblende schneidenden Spiralschlitz (SS) aufweist, der die Form einer archimedischen Spirale hat, die der Gleichung $r = c \cdot \Delta\varphi$ gehorcht, wobei r der Radius der Spirale, c der Quotient aus der Lichtstrahlabtastgeschwindigkeit bzw. Lichtpunktgeschwindigkeit $v_L$ und der relativen Winkelgeschwindigkeit ω zwischen der Winkelgeschwindigkeit der Spaltblende und der Winkelgeschwindigkeit der Spiralschlitz-Scheibe und Δ φ der relative Drehwinkel zwischen dem Drehwinkel der Spaltblende (D) und dem Drehwinkel der Scheibe (DS) ist, wobei durch das Zusammenwirken des Spaltes und des Spiralschlitzes eine Lochblende (LB) entsteht, die bei Drehung der Scheibe (DS) und/oder der Spaltblende (D) mit konstanter Drehzahl/konstanten Drehzahlen entlang dem Spalt mit konstanter Geschwindigkeit bewegt wird,

- mit wenigstens einer fotoelektrischen Einrichtung ($F_1$, $F_2$, $F_3$, $F_4$), auf welche die die Lochblende durchsetzenden und das Messobjekt abtastenden Lichtstrahlen (AS) gelenkt werden, wobei das Messobjekt (M) in Strahlrichtung gesehen hinter der Lochblende angeordnet ist, und

- mit einer Auswerteeinrichtung, die der fotoelektrischen Einrichtung nachgeschaltet ist und die Zeit misst, in der die Lichtstrahlen das Messobjekt/die Messobjekte abtasten, und aus den gemessenen Zeiten die diesen Zeiten proportionalen Außenabmessungen, Innenabmessungen oder Abstände des Messobjektes/der Messobjekte ermittelt,

**gekennzeichnet durch** folgende Merkmale:

i) es sind mehrere in Strahlrichtung gesehen vor der Spiralschlitz-Scheibe (DS) um die Drehachse (A) radial angeordnete Spalte ($D_1$, $D_2$, $D_3$, $D_4$) in der Spaltblende (D) ausgebildet und für die Spalte ist eine gemeinsame Lichtquelle oder für jeden Spalt ist eine separate Lichtquelle ($L_1$, $L_2$, $L_3$, $L_4$), die Licht mit einer Wellenlänge oder Licht mit unterschiedlichen Wellenlängen ($\lambda_1$, $\lambda_2$, $\lambda_3$, $\lambda_4$) oder Licht einer Wellenlänge mit unterschiedlichen frequenzmodulierten Lichtampliduten ($LA_1$, $LA_2$, $LA_3$, $LA_4$) aussendet, vorgesehen,

ii) es sind optische Einrichtungen ($S_1$, $S_2$, $S_3$, $S_4$, $S_5$, $S_{11}$, $S_{12}$, $S_{13}$, $S_{14}$, $S_{15}$, $S_{16}$, $S_{17}$, $S_{18}$, AW) vorgesehen, welche die die Lochblenden (LB) durchsetzenden Abtastlichtstrahlen in eine gemeinsame Strahlebene umlenken,

iii) es sind optische Einrichtungen ($S_{19}$, $S_{20}$, $S_{21}$) vorgesehen, welche die das Messobjekt (M) im Zeitabstand von T/m überstreichenden Abtastlichtstrahlen (AS) wellenlängenabhängig separieren und auf zugeordnete wellenlängenempfindliche Fotodioden ($F_1$, $F_2$, $F_3$, $F_4$) lenken, deren im Zeitabstand T/m erzeugte Ausgangssignale ($i_{F1}$, $i_{F2}$, $i_{F3}$, $i_{F4}$), die den Schattenzeiten $t_d$ proportional sind, der Auswerteeinrichtung zugeführt sind, oder

iv) es ist eine Fotodiode vorgesehen, auf die das Messobjekt (M) im Zeitabstand von T/m überstreichenden Abtastlichtstrahlen (AS) mit frequenzmodulierten Amplituden fokussiert werden und deren sich überlagernden frequenzmodulierten Fotodiodenströme in der Auswerteeinrichtung zur Separierung der dem erzeugenden System, d.h. der Anordnung aus Lichtquelle, Spaltblende und Spiralschlitz-Scheibe, zuzuordnenden Abtastlichtströme Frequenzweichen und Tiefpassfilter zugeführt werden, so dass die Signale ($i_{F1}$, $i_{F2}$, $i_{F3}$, $i_{F4}$), die den Schattenzeiten $t_d$ proportional sind, als Ausgangsignale vorliegen,

wobei für iii) und iv) gilt:

T = Dauer einer Umdrehung der Spiralschlitz-Scheibe (DS);
m = Anzahl der Spalte ($D_1$, $D_2$, $D_3$, $D_4$); und
$t_d$ = Zeiten, in denen die Abtastlichtstrahlen den Durchmesser des Messobjektes überstreichen.

2. Vorrichtung nach Anspruch 1, **gekennzeichnet durch** folgende Merkmale:

- die optischen Einrichtungen zum Umlenken der Abtastlichtstrahlen in die gemeinsame Strahlebene weisen Spiegel ($S_1$-$S_5$, $S_{11}$-$S_{18}$) und Abtastrichtungswechsler (AW) auf, die so angeordnet sind, dass die Abtastrichtungen sämtlicher Abtastlichtstrahlen (AS) gleich sind

- die optischen Einrichtungen zur wellenlängenabhängigen Separierung der Abtaststrahlen Spiegel ($S_{19}$-$S_{21}$) mit wellenlängenabhängiger Reflexion sind,

- der Abtastrichtungswechsler (AW) weist ein rechtwinklig gleichschenkliges Prisma (P) auf, auf dessen Hypotenusenfläche (H) der Abtaststrahl (AS) senkrecht fällt, dessen Abtastrichtung **durch** 180°-Knickung des Strahlenweges umgekehrt wird, wobei der in seiner Abtastrichtung umgekehrte aus dem Prisma austretende Abtastlichtstrahl **durch** zwei unter einem Winkel von 90° gegeneinander geneigte Spiegel ($S_6$, $S_7$) auf eine Parallelspiegelanordnung ($S_8$, $S_9$) gelenkt wird, die den in seiner Abtastrichtung umgekehrten Abtaststrahl in die Ebene des einfallenden Abtastlichtstrahls umlenkt,

- im Strahlenweg eines Abtastlichtstrahls angeordnete für andere Abtastlichtstrahlen vorgesehene Umlenkspiegel ($S_{14}$, $S_3$, $S_{18}$) sind teildurchlässig ausgebildet,

- die Spalte ($D_1$, $D_2$, $D_3$, $D_4$) der Spaltblende (D) sind strahlenförmig in gleichem Bogenmaßabstand voneinander vor der Spiralschlitz-Scheibe (DS) angeordnet.

3. Vorrichtung nach Anspruch 1 oder 2, **dadurch gekennzeichnet, dass** bei einem erzeugenden System die Messebene erzeugt wird durch Kombination eines Strahlteilers mit 50 % Transmission und eines Spiegels.

4. Vorrichtung nach einem der vorhergehenden Ansprüche, **dadurch gekennzeichnet, dass** die Lichtquellen ($L_1$, $L_2$, $L_3$, $L_4$) Licht einer Wellenlänge aussenden und dass optische Einrichtungen ($S_{I\,1}$-$S_{IV\,5}$) vorgesehen sind, welche die die Lochblenden (LB) durchsetzenden Lichtstrahlen in eine gemeinsame Ebene in vier Achsen umlenken, wobei vier Messfeldpaare ($x_1$, $x_2$; $x_3$, $x_4$; $x_5$, $x_6$; $x_7$, $x_8$) gebildet sind, deren zugeordnete Abtastlichtstrahlen von Fotoelementen oder Linsen-Fotodiodensystemen ($DA_{I\,1}$-$DA_{IV\,2}$) detektiert werden, deren Ausgangssignale der Auswerteeinrichtung zugeführt sind, wobei die Messfeldpaare unter einem Winkel von 45° zueinander versetzt kreisförmig angeordnet sind.

5. Vorrichtung nach einem der vorhergehenden Ansprüche, **dadurch gekennzeichnet, dass** eine Erhöhung der Anzahl m der erzeugenden Systeme für eine Kombination aus Erhöhung der Messfrequenz und der Messachsen einer Ebene bzw. von Messebenen vorgesehen ist, indem die für die Messfrequenzerhöhung erforderliche Anzahl i der erzeugenden Systeme mit der für die Erhöhung der Anzahl der Messachsen einer Ebene oder der Messebenen erforderlichen Anzahl j der erzeugenden Systeme multipliziert wird gemäß der Gleichung m = i · j.

6. Vorrichtung nach einem der vorhergehenden Ansprüche, **dadurch gekennzeichnet, dass** die Anzahl (m) der erzeugenden Systeme für eine Erhöhung der Messfrequenz erhöht wird, indem die Anzahl n der strahlenförmig und äquidistant vom Mittelpunkt der Blende (D) ausgehenden Spalten, die per Umdrehung der Scheibe (DS) mit einem Spiralschlitz (SS) sich bewegende Lochblenden (LB) bilden, und/oder die Anzahl k der in der Spiralschlitzscheibe (DS) äquidistant angeordneten Spiralschlitze ($S_1$, $S_2$, ...) erhöht wird, wobei gilt: m = n · k und Zahl der Abtastungen/sec = n · k · Umdrehungen/sec.

7. Vorrichtung zur Messung von Außenabmessungen, Innenabmessungen und Abstäuden von Messobjekten, insbesondere rohrförmigen Messobjekten,

- mit wenigstens einer Lichtquelle ($L_1$, $L_2$) und wenigstens einer Einrichtung (LS) zur Erzeugung eines Parallellichtbündels aus den Lichtstrahlen der Lichtquelle,
- mit wenigstens einer vom Parallellichtbündel beleuchtbaren Spaltblende (D),
- mit wenigstens einer vor oder hinter der Spaltblende (D) angeordneten Scheibe (DS), wobei die Spaltblende und die Scheibe relativ zueinander um eine gemeinsame Drehachse (A) bewegbar, insbesondere drehbar, sind und die Scheibe einen den Spalt der Spaltblende schneidenden Spiralschlitz (SS) aufweist, der die Form einer archimedischen Spirale hat, die der Gleichung r = c · $\Delta\,\varphi$ gehorcht, wobei r der Radius der Spirale, c der Quotient aus der Lichtstrahlabtastgeschwindigkeit bzw. Lichtpunktgeschwindigkeit $v_L$ und der relativen Winkelgeschwindigkeit $\omega$ zwischen der Winkelgeschwindigkeit der Spaltblende und der Winkelgeschwindigkeit der Spiralschlitz-Scheibe und $\Delta\,\varphi$ der relative Drehwinkel zwischen dem Drehwinkel der Spaltblende (D) und dem Drehwinkel der Scheibe (DS) ist, wobei durch das Zusammenwirken des Spaltes und des Spiralschlitzes eine Lochblende (LB) entsteht, die bei Drehung der Scheibe (DS) und/oder der Spaltblende (D) mit konstanter Drehzahl entlang dem Spalt mit konstanter Geschwindigkeit bewegt wird,
- mit wenigstens einer fotoelektrischen Einrichtung ($F_1$, $F_2$, $F_3$, $F_4$), auf welche die die Lochblende durchsetzenden und das Messobjekt abtastenden und vom Messobjekt reflektierten Lichtstrahlen (AS) gelenkt werden, wobei das Messobjekt (M) in Strahlrichtung gesehen hinter der Lochblende angeordnet ist, und
- mit einer Auswerteeinrichtung, die der fotoelektrischen Einrichtung nachgeschaltet ist und die Zeit misst, in der die Lichtstrahlen das Messobjekt/die Messobjekte abtasten, und aus den gemessenen Zeiten die diesen Zeiten proportionalen Außenabmessungen, Innenabmessungen oder Abstände des Messobjektes/der Messobjekte ermittelt,

**gekennzeichnet durch** folgende Merkmale:

- es sind wenigstens zwei die Stirnseiten der Messobjekte (M) abtastenden Abtaststrahlen erzeugende Systeme (I, III) mit wenigstens zwei Lichtquellen ($L_1$, $L_2$), mit einer Spiralschlitz-Scheibe (DS) mit Spiralschlitz (SS) und mit in Strahlrichtung hinter der Spiralschlitz-Scheibe (DS) angeordneter Spaltblende (D) mit wenigstens zwei sich radial erstreckenden Spalten ($D_1$, $D_2$) vorgesehen,
- die Spalte ($D_1$, $D_2$) weisen eine vorgebbare Länge (b) und in Radialrichtung einen vorgebbaren Abstand (a) voneinander auf,
- die Spalte ($D_1$, $D_2$) sind radial miteinander ausgerichtet und je zwei Spalte sind bezüglich der Drehachse (A) diametral zueinander angeordnet,

- die Spalte (D$_1$, D$_2$) sind jeweils auf der den Lichtquellen abgewandten Seite von Empfängerdioden (FF$_1$, FF$_2$) umgeben, auf die von der Stirnseite des Messobjekts reflektierte Abtastlichtstrahlen fallen und deren Signale Beginn der Reflexionszeiten t$_{1I}$, t$_{1III}$ und Ende der Reflexionszeiten t$_{2I}$, t$_{2III}$ definieren,

- auf einer unter einem Winkel α zur die Spalte (D$_1$, D$_2$) verbindenden Gerade (G$_2$) verlaufenden Geraden (G$_1$) **durch** die Drehachse (A) der Spaltblende (D) sind beiderseits der Drehachse jeweils eine Lochblende (LB$_1$ und LB$_2$) in der Spaltblende ausgebildet,

- die Lochblenden (LB$_1$, LB$_2$) weisen bei einem Spaltenabstand a einen vorgebbaren Abstand 1 = a/2 - r$_{max}$/( (90 - α)/360) von der Drehachse (A) auf, mit r$_{max}$ = maximaler Abstand des Spiralschlitzes vom Spiral-Mittelpunkt bzw. von der Drehachse (A) und α = vorgebbarer Winkel zwischen der die Lochblenden verbindenden Gerade (G$_1$) und der die Spalte (D$_1$, D$_2$) verbindenden Gerade (G$_2$),

- lichtquellenseitig ist wenigstens eine weitere Lichtquelle (LD$_1$, LD$_2$) zur Beleuchtung der Lochblenden LB$_1$, LB$_2$ angeordnet,

- auf der der Lichtquelle (LD$_1$, LD$_2$) abgewandten Seite der Lochblenden (LB$_1$, LB$_2$) sind Fotodioden (F$_1$, F$_2$) angeordnet, auf die die Lochblenden passierendes Licht fällt und deren Ausgangssignale Startzeitpunkte der Abtastvorgänge über die Spaltlänge (b) der Spalte (D$_1$, D$_2$) definieren

- die zusätzliche Lichtquelle (LD$_1$, LD$_2$) wird **durch** zwei Leuchtdioden gebildet, von denen je eine jeweils einer Lochblende (LB$_1$, LB$_2$) zugeordnet ist.

8. Vorrichtung nach Anspruch 7, **dadurch gekennzeichnet, dass** die Auswerteeinrichtung den Außendurchmesser D$_a$, den Innendurchmesser D$_i$ und die Wandstärken WD$_I$ und WD$_{III}$ von rohrförmigen Messobjekten (M) aus dem vorgegebenen Abstand a der Spalte (D$_1$, D$_2$) der Spaltblende (D), der Lichtstrahlabtast- bzw. LichtpunktGeschwindigkeit v$_L$ und den über die Empfängerdioden (FF$_1$, FF$_2$) erfassten Zeitpunkten des Reflexionsbeginns t$_{1I}$, t$_{1III}$ und des Reflexionsendes t$_{2I}$, t$_{2III}$ nach folgenden Formeln ermittelt:

$$D_a = a + v_L \cdot (t_{2I} + t_{2III})$$

$$D_i = a + v_L \cdot (t_{1I} + t_{1III})$$

$$WD_I = v_L \cdot (t_{2I} - t_{1I})$$

$$WD_{III} = v_L \cdot (t_{2III} - t_{1III})$$

mit v$_L$ = r$_{max}$ · n/60 [m/sec] und n = Zahl der Umdrehungen/min und r$_{max}$ = max. Abstand des Spiralschlitzes vom Spiralschlitz-Scheibenmittelpunkt (A).

9. Vorrichtung nach einem der Ansprüche 7-9, **dadurch gekennzeichnet, dass** die aus den erzeugenden Systemen (I, III), den zusätzlichen Lichtquellen (LD$_1$, LD$_2$) und den Fotodioden (FF$_1$, FF$_2$, F$_1$, F$_2$) bestehende Messvorrichtung als Ganzes um die Drehachse (A) drehbar ist.

10. Vorrichtung nach einem der Ansprüche 7-9, **dadurch gekennzeichnet, dass** die weitere Lichtquelle (LD$_1$, LD$_2$) auf der gemeinsamen Drehachse (A) zusammen mit der Spaltblende (D), mit der sie drehfest verbunden ist, relativ zu der Spiralschlitz-Scheibe (DS) mit der gemeinsamen Winkelgeschwindigkeit ω$_D$ drehbar ist, wobei die Spiralschlitz-Scheibe (DS) mit der Winkelgeschwindigkeit ω$_{DS}$ drehbar ist, so dass für den relativen Drehwinkel Φ = Φ$_{DS}$ - Φ$_D$ gilt und sich die Dauer eines kompletten Abtastvorganges t$_A$ aus dem maximalen relativen Drehwinkel Φ = 2π und den Winkelgeschwindigkeiten ω$_{DS}$ und ω$_D$, die proportional zu den Drehzahlen n$_{DS}$ und n$_D$ in Umdrehungen/min der Spiralschlitz-Drehscheibe (DS) und der Lichtquelle/Spaltblende (LD$_1$, LD$_2$, D) sind, ergibt zu

$$t_A = 2\pi/(\omega_{DS} - \omega_D) = 1/(f_{DS} - f_D)$$

mit $f_{DS}$ und $f_D$ in Umdrehungen/sec,
so dass der gemeinsame Drehwinkelfortschritt $\Phi_U$ von Spaltblende (D) und Lichtquelle ($LD_1$, $LD_2$) während eines Abtastvorganges $\Phi_U = t_A \cdot 360° \cdot f_D$ beträgt und
der Messobjekt-Umfang nach einer Zeit $T_D/m = (1/f_D)/m$ vollständig abgetastet ist, wobei $T_D = 1/f_D$ die Zeit für eine Umdrehung der Spaltblende/Lichtquelle und m die Zahl der erzeugenden Systeme ist.

**Claims**

1. An apparatus for measuring outside dimensions, inside dimensions, and spacings of measurement objects (M),

   - having at least one light source ($L_1$, $L_2$, $L_3$, $L_4$) and at least one device (LS) for generating a parallel-light bundle from the light beams of the light source,
   - having at least one slit diaphragm (D) that can be illuminated by the parallel-light bundle,
   - having at least one disc (DS) arranged in front of or behind the slit diaphragm (D), it being possible for the slit diaphragm and the disc to be moved, in particular rotated, relative to one another about a common axis of rotation (A), and the disc having a spiral slot (SS) that intersects the slit of the slit diaphragm and that has the shape of an Archimedean spiral and that obeys the equation $r = c \cdot \Delta\varphi$, r being the radius of the spiral, c the quotient from the light-beam scanning speed or the light-point speed $v_L$ and the relative angular velocity w between the angular velocity of the slit diaphragm and the angular velocity of the spirally slotted disc and $\Delta\varphi$ being the relative angle of rotation between the angle of rotation of the slit diaphragm (D) and the angle of rotation of the disc (DS), the slit and the spiral slot cooperating to form a pinhole (LB) that is being moved along the slit at a constant speed when the disc (DS) and/or the slit diaphragm (D) are rotated at a constant speed/ constant speeds,
   - having at least one photo-electric device ($F_1$, $F_2$, $F_3$, $F_4$) onto which the light beams (AS) that pass the pinhole and scan the measurement object are directed, the measurement object (M) being arranged behind the pinhole when viewed in the direction of the beams, and
   - having an evaluation device that is connected downstream of the photo-electric device and measures the time during which the light beams scan the measurement object(s) and using the measured times determines the outside dimensions, inside dimensions, or spacings of the measured object(s) that are proportional to these times,

   **characterized by** the following features:

   i) several slits ($D_1$, $D_2$, $D_3$, $D_4$), which are radially arranged about the axis of rotation (A) in front of the spirally slotted disc (DS) when viewed from the direction of the beam are formed in the slit diaphragm (D) and a common light source is provided for the slits, or a separate light source ($L_1$, $L_2$, $L_3$, $L_4$) is provided for each slit, said sources emitting light having a wavelength or light of different wavelengths ($\lambda_1$, $\lambda_2$, $\lambda_3$, $\lambda_4$) or light having a wavelength with different frequency modulated light amplitudes ($LA_1$, $LA_2$, $LA_3$, $LA_4$),
   ii) optical devices ($S_1$, $S_2$, $S_3$, $S_4$, $S_5$, $S_{11}$, $S_{12}$, $S_{13}$, $S_{14}$, $S_{15}$, $S_{16}$, $S_{17}$, $S_{18}$, AVV) are provided that deflect the scanning light beams that pass the pinholes (LB) into a common beam plane,
   iii) optical devices ($S_{19}$, $S_{20}$, $S_{21}$) are provided that separate the scanning light beams (AS) that scan the measurement object (M) at an interval T/m, as a function of the wavelength and direct it to associated wavelength-sensitive photodiodes ($F_1$, $F_2$, $F_3$, $F_4$) whose output signals ($i_{F1}$, $i_{F2}$, $i_{F3}$, $i_{F4}$) that are generated at the interval T/m and that are proportional to the shadow times $t_d$ are fed to the evaluation device, or
   iv) a photodiode is provided onto which scanning light beams (AS) that scan the measurement object (M) at an interval of T/m are focussed with frequency-modulated amplitudes and whose superimposed frequency-modulated photodiode currents are fed in the evaluation device to frequency-splitting filters and low-pass filters for the purpose of separating the scanning light beams to be assigned to the generating system, i.e. the arrangement consisting of light source, slit diaphragm and spirally slotted disc, so that the signals ($i_{F1}$, $i_{F2}$, $i_{F3}$, $i_{F4}$) that are proportional to the shadow times $t_d$ are present as output signals,
   the following being the case for iii) and iv):

   T = duration of one revolution of the spirally slotted disc (DS);
   m = number of slots ($D_1$, $D_2$, $D_3$, $D_4$); and
   $t_d$ = times in which the scanning light beams scan the diameter of the measurement object.

2. The apparatus according to Claim 1, **characterized by** the following features:

- the optical devices for deflecting the scanning light beams into the common beam plane exhibit mirrors ($S_1$ - $S_5$, $S_{11}$ - $S_{18}$) and scanning-direction changers (AW) that are arranged such that the scanning directions of all scanning light beams (AS) are identical
- the optical devices for the wavelength-dependent separation of the scanning beams are mirrors ($S_{19}$ - $S_{21}$) having a wavelength-dependent reflection,
- the scanning-direction changer (AW) has a rectangular isosceles prism (P) onto whose hypotenuse surface (H) the scanning beam (AS) impinges at right angles, whose scanning direction is reversed by bending the beam path by 180°, the scanning light beam whose scanning direction has been reversed and that exits the prism being directed by two mirrors ($S_6$, $S_7$) inclined at an angle of 90° to each other, onto a parallel-mirror arrangement ($S_8$, $S_9$) that deflects the scanning beam whose scanning direction has been reversed, into the plane of the incoming scanning light beam,
- deflecting mirrors ($S_{14}$, $S_3$, $S_{18}$) arranged in the beam path of a scanning light beam and provided for other scanning light beams are of semitransparent design,
- the slits ($D_1$, $D_2$, $D_3$, $D_4$) of the slit diaphragm (D) are arranged ray-like in front of the spirally slotted disc (DS) at the same circular-measure spacing from each other.

3. The apparatus according to Claim 1 or 2, **characterized in that** in a generating system the measurement plane is generated by combining a beam splitter having 50% transmission and a mirror.

4. The apparatus according to one of the preceding claims, **characterized in that** the light sources ($L_1$, $L_2$, $L_3$, $L_4$) emit light having a wavelength and that optical devices ($S_{I\,1}$ - $S_{IV\,5}$) are provided that deflect the light beams passing the pinholes (LB) into a common plane in four axes, four measurement-field pairs ($x_1$, $x_2$; $x_3$, $x_4$; $x_5$, $x_6$; $x_7$, $x_8$) being formed whose associated scanning light beams are detected by photo elements or lens photodiode systems ($DA_{I\,1}$ - $DA_{IV\,2}$) whose output signals are fed to the evaluation device, the measurement-field pairs being arranged in the shape of circle offset to each other at an angle of 45°.

5. The apparatus according to one of the preceding claims, **characterized in that** an increase in the number m of generating systems is envisaged for combining an increase in the measuring frequency and the measurement axes of a plane or of measurement planes, by multiplying the number i of generating systems, required for increasing the measuring frequency, by the number j of generating systems required for increasing the number of measurement axes of a plane or of the measurement planes according to the equation m = i · j.

6. The apparatus according to one of the preceding claims, **characterized in that** the number (m) of generating systems is increased for increasing the measuring frequency by increasing the number n of slits that start like rays and at a regular spacing from the centre of the diaphragm (D) and that form moving pinholes (LB) with a spiral slot (SS) for each revolution of the disc (DS), and/or the number k of spiral slots ($S_1$, $S_2$ ...) arranged at a regular spacing in the spirally slotted disc (DS), the following holding: m = n · k and number of scans/s = n · k · revolutions/s.

7. The apparatus for measuring outside dimensions, inside dimensions, and spacings of measurement objects, in particular tubular measurement objects,

- having at least one light source ($L_1$, $L_2$) and at least one device (LS) for generating a parallel-light bundle from the light beams of the light source,
- having at least one slit diaphragm (D) that can be illuminated by the parallel-light bundle,
- having at least one disc (DS) arranged in front of or behind the slit diaphragm (D), it being possible for the slit diaphragm and the disc to be moved, in particular rotated, relative to one another about a common axis of rotation (A), and the disc having a spiral slot (SS) that intersects the slit of the slit diaphragm and that has the shape of an Archimedean spiral and that obeys the equation r = c · $\Delta\varphi$, r being the radius of the spiral, c the quotient from the light-beam scanning speed or the light-point speed $v_L$ and the relative angular velocity $\omega$ between the angular velocity of the slit diaphragm and the angular velocity of the spirally slotted disc and $\Delta\varphi$ being the relative angle of rotation between the angle of rotation of the slit diaphragm (D) and the angle of rotation of the disc (DS), the slit and the spiral slot cooperating to form a pinhole (LB) that is being moved along the slit at a constant speed when the disc (DS) and/or the slit diaphragm (D) are rotated at a constant speed,
- having at least one photo-electric device ($F_1$, $F_2$, $F_3$, $F_4$) onto which the light beams (AS) that pass the pinhole and scan the measurement object and are reflected by the measurement object are directed, the measurement object (M) being arranged behind the pinhole when viewed in the direction of the beams, and
- having an evaluation device that is connected downstream of the photo-electric device and measures the time during which the light beams scan the measurement object(s) and using the measured times determines the outside dimensions, inside dimensions, or spacings of the measured object(s) that are proportional to these times,

**characterized by** the following features:

- there are provided at least two systems (I, III) generating scanning beams that scan the end faces of the measurement objects (M), having at least two light sources ($L_1$, $L_2$), having a spirally slotted disc (DS) with a spiral slot (SS) and a slit diaphragm (D) arranged behind the spirally slotted disc (DS) in the direction of the beams and having at least two radially extending slits ($D_1$, $D_2$),
- the slits ($D_1$, $D_2$) exhibit a predeterminable length (b) and in the radial direction a predeterminable spacing (a) from each other,
- the slits ($D_1$, $D_2$) are radially aligned with each other and two slits each are arranged diametrally to each other relative to the axis of rotation(A),
- on the side facing away from the light sources the slits ($D_1$, $D_2$) are each surrounded by receiver diodes ($FF_1$, $FF_2$) on which the scanning light beams reflected by the front face of the measurement object impinge and whose signals define the start of the reflection times $t_{1I}$, $t_{1III}$ and the end of the reflection times $t_{2I}$, $t_{2III}$,
- on both sides of the axis of rotation (A) a pinhole ($LB_1$ and $LB_2$) is in each case formed in the slit diaphragm on a straight line ($G_1$) running through the axis of rotation (A) of the slit diaphragm (D), that straight line extending at an angle $\alpha$ to the straight line ($G_2$) connecting the slits ($D_1$, $D_2$),
- at a slit spacing a the pinholes ($LB_1$, $LB_2$) exhibit a predeterminable spacing $I = a/2 - r_{max}/((90 - \alpha)/360)$ from the axis of rotation (A), $r_{max}$ = maximum spacing of the spiral slot from the spiral centre or from the axis of rotation (A) and $\alpha$ = predeterminable angle between the straight line ($G_1$) connecting the pinholes and the straight line ($G_2$) connecting the slits ($D_1$, $D_2$),
- on the side of the light source at least one further light source ($LD_1$, $LD_2$) is arranged for illuminating the pinholes $LB_1$, $LB_2$,
- on that side of the pinholes ($LB_1$, $LB_2$) facing away from the light source ($LD_1$, $LD_2$) photodiodes ($F_1$, $F_2$) are arranged on which light passing the pinholes impinges and whose output signals define starting times of the scanning processes across the slit length (b) of the slits ($D_1$, $D_2$)
- the additional light source ($LD_1$, $LD_2$) is formed by two light-emitting diodes, one of which is in each case assigned to a pinhole ($LB_1$, $LB_2$)).

8. The apparatus according to Claim 7, **characterized in that** the evaluation device determines the outside diameter $D_a$, the inside diameter $D_i$, and the wall thicknesses $WD_I$ and $WD_{III}$ of tubular measurement objects (M) using the predetermined spacing a of the slits ($D_1$, $D_2$) of the slit diaphragm (D), the light-beam scanning speed and/or light-point speed $v_L$ and the times, detected using the receiver diodes ($FF_1$, $FF_2$), of the times of the start $t_{1I}$, $t_{1III}$ of the reflection and of the end $t_{2I}$, $t_{2III}$ of the reflection in accordance with the following formula:

$$D_a = a + v_L \cdot (t_{2I} + t_{2III})$$

$$D_i = a + v_L \cdot (t_{1I} + t_{1III})$$

$$WD_I = v_L \cdot (t_{2I} - t_{1I})$$

$$WD_{III} = v_L \cdot (t_{2III} - t_{1III})$$

with $v_L = r_{max} \cdot n/60$ [m/s] and n = number of revolutions per minute and $r_{max}$ = max. spacing of the spiral slot from the centre (A) of the spirally slotted disc.

9. The apparatus according to one of Claims 7-9, **characterized in that** the measurement apparatus consisting of the generating systems (I, III), the additional light sources ($LD_1$, $LD_2$) and the photodiodes ($FF_1$, $FF_2$, $F_1$, $F_2$) can be

rotated in its entirety about the axis of rotation (A).

10. The apparatus according to one of Claims 7-9, **characterized in that** the further light source ($LD_1$, $LD_2$) can be rotated on the common axis of rotation (A) together with the slit diaphragm (D) to which it is connected firmly in terms of rotation, relative to the spirally slotted disc (DS) at the common angular velocity $\omega_D$, it being possible for the spirally slotted disc (DS) to be rotated at the angular velocity $\omega_{DS}$, so that $\Phi = \Phi_{DS} - \Phi_D$ holds for the relative angle of rotation and the duration of a complete scanning process $t_A$ results from the maximum relative angle of rotation $\Phi = 2\pi$ and the angular velocities $\omega_{DS}$ and $\omega_D$ that are proportional to the rotational speeds $n_{DS}$ and $n_D$ in revolutions per minute of the spirally slotted rotating disc (DS) and the light source/slit diaphragm ($LD_1$, $LD_2$, D), as:

$$t_A = 2\pi/(\omega_{DS} - \omega_D) = 1/(f_{DS} - f_D),$$

$f_{DS}$ and $f_D$ in revolutions/s,
so that the common progress $\Phi_u$ of the angle of rotation of slit diaphragm (D) and light source ($LD_1$, $LD_2$) during a scanning process amounts to $\Phi_u = t_A \cdot 360° \cdot f_D$, and
the circumference of the measurement object is scanned completely after a time $T_D/m = (1/f_D)/m$, $T_D = 1/f_D$ being the time for one revolution of the slit diaphragm/light source and m being the number of generating systems.

**Revendications**

1. Dispositif de mesure des dimensions extérieures/intérieures et des écarts d'objets à mesurer (M)

   - avec au moins une source lumineuse ($L_1$, $L_2$, $L_3$, $L_4$) et au moins un dispositif (LS) de production d'un faisceau lumineux parallèle à partir des rayons de lumière de la source lumineuse,
   - avec au moins un diaphragme à fente (D) éclairable par le faisceau lumineux parallèle,
   - avec au moins une plaque (DS) disposée devant ou derrière le diaphragme à fente (D), auquel cas le diaphragme à fente et la plaque sont relativement mobiles l'un par rapport à l'autre autour d'un axe commun (A), notamment du point de vue rotatif, la plaque présentant une fente hélicoïdale (SS) coupant le diaphragme à fente, ayant la forme d'une spirale d'Archimède répondant à l'équation $r = c \cdot \Delta \varphi$, r étant le rayon de la spirale, c le quotient de la vitesse de balayage du rayon lumineux ou de la vitesse du point lumineux $v_L$ et de la vitesse angulaire relative $\omega$ entre la vitesse angulaire du diaphragme à fente et la vitesse angulaire de la plaque à fente hélicoïdale et $\Delta \varphi$ de l'écart angulaire relatif entre l'écart angulaire du diaphragme à fente (D) et l'écart angulaire de la plaque (DS), auquel cas il résulte, grâce à l'action combinée du diaphragme et de la fente hélicoïdale, un sténopé (LB), qui, lors de la rotation de la plaque (DS) et/ou du diaphragme à fente (D) à nombre(s) de tour(s) constant(s), est déplacé à vitesse constante le long de la fente,
   - avec au moins un dispositif photoélectrique (Fi, $F_2$, $F_3$, $F_4$), sur lequel sont dirigés les rayons lumineux (AS) traversant le sténopé et balayant l'objet à mesurer, alors que l'objet à mesurer (M), vu dans le sens des rayons, est disposé derrière le sténopé, et
   - avec un dispositif d'évaluation qui est branché en aval du dispositif photoélectrique et qui mesure le temps pendant lequel les rayons lumineux balaient l'objet/les objets à mesurer, et détermine à partir des temps mesurés les dimensions extérieures, les dimensions intérieures ou les écarts de l'objet/des objets à mesurer proportionnels à ces temps,

   **caractérisé par** les signes distinctifs suivants :

   I) plusieurs fentes ($D_1$, $D_2$, $D_3$, $D_4$) formées dans le diaphragme à fente (D) sont disposées radialement dans le sens des rayons lumineux devant la plaque à fente hélicoïdale (DS) autour de l'axe de rotation (A) et il est prévu une source lumineuse commune pour les fentes ou pour chaque fente une source lumineuse ($L_1$, $L_2$, $L_3$, $L_4$) séparée qui émet de la lumière avec une longueur d'onde ou de la lumière avec différentes longueurs d'onde ($\lambda_1$, $\lambda_2$, $\lambda_3$, $\lambda_4$) ou de la lumière d'une longueur d'onde avec différentes amplitudes lumineuses à fréquence modulée ($LA_1$, $LA_2$, $LA_3$, $LA_4$),
   II) des dispositifs optiques ($S_1$, $S_2$, $S_3$, $S_4$, $S_5$, $S_{11}$, $S_{12}$, $S_{13}$, $S_{14}$, $S_{15}$, $S_{16}$, $S_{17}$, $S_{18}$, AW) sont prévus, lesquels dévient les rayons lumineux de balayage traversant les sténopés (LB) dans un plan de rayonnement commun
   III) des dispositifs optiques ($S_{19}$, $S_{20}$, $S_{21}$) sont prévus, lesquels séparent les rayons lumineux de balayage (AS) qui balaient l'objet à mesurer (M) à intervalles de temps T/m en fonction de la longueur d'onde et dirigent

vers des photodiodes ($F_1$, $F_2$, $F_3$, $F_4$) attribuées prenant en compte la longueur d'onde, dont les signaux de sortie ($i_{F1}$, $i_{F2}$, $i_{F3}$, $i_{F4}$) émis à intervalles de temps T/m qui sont proportionnels aux durées fantômes $t_d$, sont envoyés au dispositif d'évaluation, ou

IV) il est prévu une photodiode sur laquelle les rayons lumineux de balayage (AS) qui balaient l'objet à mesurer (M) à intervalles de temps T/m sont concentrés avec des amplitudes à fréquence modulée et dont les courants de photodiode à fréquence modulée se superposant sont envoyées au dispositif d'évaluation pour séparer les courants lumineux de balayage, diplexeurs et filtres passe-bas à attribuer au système à produire - c-à-d. la disposition de la source lumineuse, du sténopé et de la plaque à fente hélicoïdale - si bien que les signaux ($i_{F1}$, $i_{F2}$, $i_{F3}$, $i_{F4}$) qui sont proportionnels aux durées fantômes $t_d$ sont disponibles comme signaux de sortie, auquel cas on a pour iii) et iv) :

T = durée d'un tour de la plaque à fente hélicoïdale (DS) ;
m = nombre de fentes ($D_1$, $D_2$, $D_3$, $D_4$) ; et
$t_d$ = durées pendant lesquelles les rayons lumineux de balayage balaient le diamètre de l'objet à mesurer

2. Dispositif suivant la revendication 1, **caractérisée par** les signes distinctifs suivants :

- les dispositifs optiques de déviation des rayons lumineux de balayage dans tout le plan de rayonnement présentent des miroirs ($S_1$-$S_5$, $S_{11}$-$S_{18}$) et des changeurs de direction de balayage (AW) qui sont disposés de façon à ce que les directions de balayage de tous les rayons lumineux de balayage (AS) soient identiques
- les dispositifs optiques de séparation des rayons de balayage en fonction de la longueur d'onde sont des miroirs ($S_{19}$-$S_{21}$) à réflexion en fonction de la longueur d'onde,
- le changeur de direction de balayage (AW) présente un prisme rectangle-isocèle (P) sur la surface de l'hypoténuse (H) duquel tombe verticalement le rayon de balayage (AS) dont la direction de balayage, est inversée par une réflexion à 180° du rayon, auquel cas le rayon lumineux de balayage ressortant du prisme en sens de balayage inverse est dirigé par deux miroirs ($S_6$/ $S_7$) inclinés selon un angle de 90° l'un par rapport à l'autre vers une disposition parallèle de miroirs ($S_8$, $S_9$) qui dévie le rayon de balayage au sens de balayage inversé sur le plan du rayon lumineux de balayage incident,
- les miroirs de déviation ($S_{14}$, $S_3$, $S_{18}$) prévus pour d'autres rayons lumineux de balayage placés sur le chemin de rayonnement d'un rayon lumineux de balayage sont partiellement translucide,
- les fentes ($D_1$, $D_2$, $D_3$, $D_4$) du diaphragme à fente (D) sont disposées radialement avec le même écart de mesure d'arc l'une par rapport à l'autre devant la plaque à fente hélicoïdale (DS).

3. Dispositif selon revendication 1 ou 2, **caractérisé par le fait que** sur un système producteur. le plan de mesure est produit par la combinaison d'une lame séparatrice avec 50 % de transmission et d'un miroir.

4. Dispositif selon l'une des revendications précédentes, **caractérisé par le fait que** les sources lumineuses ($L_1$, $L_2$, $L_3$, $L_4$) émettent de la lumière d'une longueur d'onde et que des dispositifs optiques ($S_{I\,1}$-$S_{IV\,s}$) sont prévus, lesquels dévient les rayons lumineux traversant les sténopés (LB) vers un plan commun à quatre axes, formant quatre paires de champs de mesure ($x_1$, $x_2$; $x_3$, $x_4$; $x_5$, $x_6$; $x_7$, $x_8$) dont les rayons lumineux de balayage affectés sont détectés par des photo-éléments ou des systèmes à photodiodes-lentilles ($DA_{I\,1}$-$DA_{IV\,2}$) dont les signaux de sortie sont envoyés au dispositif d'évaluation, les paires de champs de mesure étant placés en cercle à intervalle angulaire de 45°.

5. Dispositif selon l'une des revendications précédentes, **caractérisé par le fait qu'**une augmentation du nombre m des systèmes producteurs pour une combinaison d'augmentation de la fréquence de mesure et des axes de mesure d'un plan ou de plusieurs plans de mesure est prévue en multipliant le nombre i de systèmes producteurs nécessaire à l'augmentation de fréquence de mesure par le nombre j de systèmes producteurs nécessaire à l'augmentation des axes de mesure d'un plan ou de plusieurs plans, conformément à l'équation m = i • j.

6. Dispositif selon l'une des revendications précédentes, **caractérisé par le fait que** le nombre m de systèmes producteurs pour une augmentation de la fréquence de mesure est augmenté en augmentant le nombre n des fentes partant du centre du diaphragme (D) de façon radiale et équidistante qui forment par tour de la plaque (DS) des sténopés (LB) qui se déplacent avec une fente hélicoïdale (SS), et/ou en augmentant le nombre k des fentes hélicoïdales ($S_1$, $S_2$,...) placées à équidistance dans la plaque à fente hélicoïdale (DS), auquel cas m = n • k et le nombre de balayages/sec = n • k • tours/sec.

7. Dispositif de mesure de dimensions extérieures/intérieures et d'écarts d'objets à mesurer (M), notamment d'objets à mesurer de forme tubulaire,

- avec au moins une source lumineuse ($L_1$, $L_2$,) et au moins un dispositif (LS) de production d'un faisceau lumineux parallèle à partir des rayons de lumière de la source lumineuse,
- avec au moins un diaphragme à fente (D) éclairable par le faisceau lumineux parallèle,
- avec au moins une plaque (DS) disposée devant ou derrière le diaphragme à fente (D), auquel cas le diaphragme à fente et la plaque sont relativement mobiles l'un par rapport à l'autre autour d'un axe commun (A), notamment du point de vue rotatif, la plaque présentant une fente hélicoïdale (SS) coupant le diaphragme à fente, ayant la forme d'une spirale d'Archimède répondant à l'équation r = c • $\Delta$ φ, r étant le rayon de la spirale, c le quotient de la vitesse de balayage du rayon lumineux ou de la vitesse du point lumineux $v_L$ et de la vitesse angulaire relative w entre la vitesse angulaire du diaphragme à fente et la vitesse angulaire de la plaque à fente hélicoïdale et $\Delta$ φ de l'écart angulaire relatif entre l'écart angulaire du diaphragme à fente (D) et l'écart angulaire de la plaque (DS), auquel cas il résulte, grâce à l'action combinée du diaphragme et de la fente hélicoïdale, un sténopé (LB), qui, lors de la rotation de la plaque (DS) et/ou du diaphragme à fente (D) à nombre(s) de tour(s) constant(s), est déplacé à vitesse constante le long de la fente,
- avec au moins un dispositif photoélectrique ($F_1$, $F_2$, $F_3$, $F_4$), sur lequel sont dirigés les rayons lumineux (AS) traversant le sténopé et balayant l'objet à mesurer, alors que l'objet à mesurer (M), vu dans le sens des rayons, est disposé derrière le sténopé, et
- avec un dispositif d'évaluation qui est branché en aval du dispositif photo-électrique et qui mesure le temps pendant lequel les rayons lumineux balaient l'objet/les objets à mesurer, et détermine à partir des temps mesurés les dimensions extérieures, les dimensions intérieures ou les écarts de l'objet/des objets à mesurer proportionnels à ces temps,

**caractérisé par** les signes distinctifs suivants :

- au moins deux rayons lumineux de balayage balayant les faces frontales de l'objet à mesurer (M) produisant des systèmes (I, III) avec au moins deux sources lumineuses ($L_1$, $L_2$), avec une plaque à fente hélicoïdale (DS) avec fente hélicoïdale (SS) et avec un diaphragme à fente (D) placé derrière la plaque à fente hélicoïdale (DS) dans le sens du rayonnement, avec au moins deux fentes (D1, D2) s'étendant radialement, sont prévus
- les fentes ($D_1$, $D_2$) présentent une longueur imposable (b) et dans le sens radial un écart imposable (a) l'une par rapport à l'autre,
- les fentes ($D_1$, $D_2$) sont orientées radialement l'une par rapport à l'autre et deux fentes sont respectivement disposées diamétralement l'une à l'autre par rapport à l'axe de rotation (A),
- les fentes ($D_1$, $D_2$) sont respectivement entourées, du côté opposé aux sources lumineuses, par des diodes de réception ($FF_1$, $FF_2$) sur lesquelles tombent les rayons lumineux de balayage réfléchis par le côté frontal de l'objet à mesurer et dont les signaux définissent le début des temps de réflexion $t_{1I}$, $t_{1III}$ et la fin des temps de réflexion $t_{2I}$, $t_{2III}$,
- sur l'une des droites ($G_1$) passant dans un angle $\alpha$ par rapport à la droite ($G_2$) reliant les fentes ($D_1$, $D_2$) à travers l'axe de rotation (A) du diaphragme à fente (D), un sténopé ($LB_1$ et $LB_2$) est respectivement formé dans le diaphragme à fente des deux côtés de l'axe de rotation,
- les sténopés ($LB_1$, $LB_2$) présentent pour un écart de fente a un écart imposable I = a/2 - $r_{max}$/((90 - $\alpha$) / 360) de l'axe de rotation (A), avec $r_{max}$ = écart maximal de la fente hélicoïdale par rapport au centre de la spirale ou à l'axe de rotation (A) et $\alpha$ = angle imposable entre la droite ($G_1$)reliant les sténopés et la droite ($G_2$) reliant les fentes ($D_1$, $D_2$),
- au moins une source lumineuse supplémentaire ($LD_1$, $LD_2$) est placée du côté des sources lumineuses pour l'éclairage des sténopés $LB_1$, $LB_2$
- du côté des sténopés ($LB_1$, $LB_2$) opposé à la source lumineuse ($LD_1$, $LD_2$), sont placées des photodiodes ($F_1$, $F_2$) sur lesquelles tombe la lumière passant les sténopés et dont les signaux de sortie définissent les points de départ des opérations de balayage sur la longueur de fente (b) de la fente ($D_1$, $D_2$)
- la source lumineuse ($LD_1$, $LD_2$) supplémentaire est formée par deux diodes lumineuses auxquelles un sténopé ($LB_1$, $LB_2$) est respectivement attribué.

8. Dispositif selon la revendication 7, **caractérisé par le fait que** le dispositif d'évaluation détermine d'après les formules suivantes le diamètre extérieur $D_a$, le diamètre intérieur $D_i$ et les épaisseurs de paroi $WD_I$ et $WD_{III}$ d'objets à mesurer (M) de forme tubulaire à partir de l'écart donné a entre les fentes ($D_1$, $D_2$) du diaphragme à fente (D), de la vitesse du rayon lumineux de balayage ou du point lumineux $V_L$ et des moments du commencement de la réflexion $t_{1I}$, $t_{1III}$ et de la fin de la réflexion $t_{2I}$, $t_{2III}$ saisis par les diodes de réception ($FF_1$, $FF_2$) :

$$D_a \quad = a + v_L \cdot (t_{2I} + t_{2III})$$

$$D_i \quad = a + v_L \cdot (t_{1I} + t_{1III})$$

$$WD_I \quad = v_L \cdot (t_{2I} - t_{1I})$$

$$WD_{III} \quad = v_L \cdot (t_{2III} - t_{1III})$$

avec $v_L = r_{max} \cdot n/60$ [m/sec] et n = nombre de tours/min et $r_{max}$ = écart max. de la fente hélicoïdale par rapport au centre de la plaque à fente hélicoïdale (A).

9. Dispositif selon l'une des revendications 7-9, **caractérisé par le fait que** le dispositif de mesure composé des systèmes producteurs (I, III), des sources lumineuses supplémentaires ($LD_1$, $LD_2$) et des photodiodes ($FF_1$, $FF_2$, $F_1$, $F_2$) peut tourner comme un tout autour de l'axe de rotation (A).

10. Dispositif selon l'une des revendications 7-9, **caractérisé par le fait que** la source lumineuse ($L_1$, $LD_2$) supplémentaire est orientable sur l'axe de rotation commun (A) avec le diaphragme à fente (D), avec lequel elle est fermement liée sans pouvoir tourner, relativement à la plaque à fente hélicoïdale (DS) à une vitesse angulaire commune $\omega_D$, auquel cas la plaque à fente hélicoïdale (DS) peut être tournée à la vitesse angulaire $\omega_{DS}$, si bien que l'on a pour l'écart angulaire relatif $\Phi = \Phi_{DS} - \Phi_D$ et que la durée d'une opération complète de balayage $t_A$ de l'écart angulaire relatif maximal $\Phi = 2\pi$ et des vitesses angulaires $\omega_{DS}$ et $\omega_D$ qui sont proportionnelles aux vitesses de rotation $n_{DS}$ et $n_D$ en tours/min de la plaque à fente hélicoïdale (DS) et de la source lumineuse/diaphragme à fente ($LD_1$, $LD_2$, D) donne

$$t_A = 2\pi/(\omega_{DS} - \omega_D) = 1 / (f_{DS} - f_D)$$

avec $f_{DS}$ et $f_D$ en tours/sec,
si bien que la progression de l'écart angulaire commun $\Phi_U$ du diaphragme à fente (D) et de la source lumineuse ($LD_1$, $LD_2$) s'élève pendant une opération de balayage à $\Phi_U = t_A \cdot 360° \cdot f_D$ et
le périmètre de l'objet à mesurer est entièrement balayé après une durée $T_D/m = (1/f_D)/m$, auquel cas $T_D = 1/f_D$ est la durée pour un tour du diaphragme à fente/source lumineuse et m le nombre des systèmes producteurs.

Fig.1                    Fig.2

Fig.5

Fig.3

Fig.4

Fig.6

Fig. 7

Fig. 8

Fig. 9

Fig. 10

Fig. 11

Fig. 12

Fig. 13

Fig. 14

System III | System I

$t_{2_{III}}$   $t_{1_{III}}$   0   0   $t_{1_I}$   $t_{2_I}$

Fig. 15

Objekt 2

$S_{22}$

$L_{S1}$

$D$

FE

$D_1$

$D_{(2)}$

$LR_2$

$LR_1$

$D_{(1)}$

$L_D$

$I$

$ST$

$AS$

$a/2$

Objekt 1

$F_2$

Fig. 16

Volt
[V]

1 (Objekt 1)

2 (Objekt 2)

$U_1$

$t_0$     $t_1$     $t_2$  $t_E$

$t$

Fig. 17

**EP 1 509 746 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3816322